# EUROPÄISCHE PATENTSCHRIFT

(11) **EP 2 373 719 B1**
(45) Veröffentlichungstag und Bekanntmachung des Hinweises auf die Patenterteilung: **16.10.2013**
(21) Anmeldenummer: 09778059.7
(22) Anmeldetag: 22.08.2009
(51) Int. Cl.: C09D 201/00, C08G 18/80, C09D 175/04, C09D 167/00, C08G 18/42

(54) **BESCHICHTUNGSMITTEL UND DARAUS HERGESTELLTE BESCHICHTUNGEN MIT HOHER KRATZBESTÄNDIGKEIT UND WITTERUNGSSTABILITÄT SOWIE GUTEN OPTISCHEN EIGENSCHAFTEN**
COATING AGENT AND COATINGS PRODUCED THEREFROM HAVING HIGH SCRATCH RESISTANCE AND WEATHERING RESISTANCE AND GOOD OPTICAL PROPERTIES
AGENT DE REVÊTEMENT ET REVÊTEMENTS RÉALISÉS À PARTIR DUDIT AGENT ET AYANT UNE RÉSISTANCE ÉLEVÉE AUX RAYURES ET AUX INTEMPÉRIES ET DE BONNES PROPRIÉTÉS OPTIQUES

(30) Priorität: 05.12.2008 DE 102008060454
(43) Veröffentlichungstag der Anmeldung: 12.10.2011
(73) Patentinhaber: BASF Coatings GmbH, 48165 Münster (DE)
(72) Erfinder: KLEIN, Günter, 48165 Münster (DE); FELDMANN, Björn, 48165 Münster (DE); HOLTSCHULTE, Sabine, 40213 Düsseldorf (DE); HOTTENBACHER, Silke, 48165 Münster (DE); POPPE, Andreas, 97753 Karlstadt (DE); CLAUSEN-MEIRING, Ulrike, 48308 Senden (DE)
(74) Vertreter: Leifert & Steffan
(86) Internationale Anmeldenummer: PCT/EP2009/006110
(87) Internationale Veröffentlichungsnummer: WO 2010/063332

(56) Entgegenhaltungen:
- WO-A1-2005/118677

## Beschreibung

Gegenstand der vorliegenden Erfindung sind Beschichtungsmittel enthaltend
(a) mindestens eine hydroxylgruppenhaltige Verbindung (A),
b) mindestens eine Verbindung (B) mit freien und/oder blockierten Isocyanatgruppen, die zumindest teilweise hydrolysierbare Silangruppen enthält, und
(c) mindestens einen Katalysator (D) für die Vernetzung von Silangruppen.

Außerdem betrifft die Erfindung ein mehrstufiges Beschichtungsverfahren unter Verwendung dieser Beschichtungsmittel sowie die Verwendung der Beschichtungsmittel als Klarlack bzw. Anwendung des Beschichtungsverfahrens für die Automobilserienlackierung und die Automobilreparaturlackierung

Die EP-A-1 273 640 beschreibt Beschichtungsmittel enthaltend eine Polyol-Komponente und eine Vernetzerkomponente, bestehend aus aliphatischen und/oder cycloaliphatischen Polyisocyanaten, wobei 0,1 bis 95 mol-% der ursprünglich freien vorhandenen Isocyanatgruppen mit Bisalkoxylsilylamin umgesetzt ist. Als Polyol-Komponente können in den dort beschriebenen Beschichtungsmitteln alle üblicherweise eingesetzten OH-Komponenten, wie beispielsweise hydroxylgruppenhaltige Polyacrylatcopolymerisate und/oder Polymethacrylatcopolymerisate, Polyesterpolyole, Polycarbonatdiole, Polyetherpolyole oder urethan- und estergruppenhaltige Polyole oder deren Mischungen eingesetzt werden.

Diese in der EP-A-1 273 640 beschriebenen Beschichtungsmittel können für die OEM-Serienlackierung eingesetzt werden und weisen eine gute Kratzbeständigkeit bei gleichzeitig guter Beständigkeit gegen Umwelteinflüsse auf. Jedoch neigen diese Beschichtungsmittel besonders stark zur Nachvernetzung, da der Umsatz beim thermischen Aushärten nach der Applikation ungenügend ist. Dies wirkt sich besonders auf die Witterungsstabilität negativ aus. Außerdem sind die optischen Eigenschaften, insbesondere das Appearance, der resultierenden Beschichtungen noch verbesserungsbedürftig. Dies gilt insbesondere, wenn eine Eigenschaftskombination von Klarlacken mit guter Appearance bei gleichbleibend guter Kratzbeständigkeit, d. h. guten Ergebnissen im Hammer - Test, erreicht werden soll. Grundsätzlich kann zwar durch den Einsatz von konventionellen Polyestern eine Verbesserung im Appearance erreicht werden, solche Verbesserungen führen jedoch gleichzeitig zu einer Reduktion der mechanischen Eigenschaften.

Ferner sind in der EP-A-994 117 feuchtehärtbare Mischungen beschrieben, welche eine Polyol-Komponente und eine Polyisocyanat-Komponente, die teilweise mit einem bevorzugt zu einem Aspartat umgesetzten Monoalkoxysilylalkylamin umgesetzt sein kann, enthalten. Als Polyol-Komponente werden Polyesterpolyole, Polyetherpolyole, Polyhydroxypolycarbonate, Polyhydroxyacetale, Polyhydroxypolyacrylate, Polyhydroxypolyesteramide und Polyhydroxypolythioether eingesetzt, wobei aber Polyhydroxypolyacrylate besonders bevorzugt sind. Beschichtungen aus solchen Mischungen weisen zwar eine gewisse Härte auf, sind jedoch hinsichtlich Witterungsstabilität und insbesondere hinsichtlich Kratzfestigkeit für OEM-Anwendungen nur bedingt geeignet. Außerdem sind auch hier die optischen Eigenschaften, insbesondere das Appearance, der resultierenden Beschichtungen noch verbesserungsbedürftig.

Weiterhin sind aus der WO2008/074489 Beschichtungsmittel bekannt, die zu Beschichtungen mit einer hohen Kratzbeständigkeit bei einer gleichzeitig guten Witterungsstabilität führen. Diese Beschichtungsmittel enthalten mindestens eine hydroxylgruppenhaltige Verbindung (A), mindestens eine isocyanatgruppenhaltige Verbindung (B), wobei ein oder mehrere Bestandteile des Beschichtungsmittels hydrolysierbare Silangruppen aufweisen. Es ist erfindungswesentlich, dass die dort beschriebenen Beschichtungsmittel als Katalysator (D) für die Vernetzung der Silangruppen phosphorhaltige Katalysatoren, insbesondere aminblockierte Phosphorsäureethylhexylteilester, enthalten.

Ferner sind auch aus der WO 2008/074491 Beschichtungsmittel bekannt, die zu Beschichtungen mit einer hohen Kratzbeständigkeit bei einer gleichzeitig guten Witterungsstabilität führen. Diese Beschichtungsmittel enthalten mindestens eine hydroxylgruppenhaltige Verbindung (A) und mindestens eine isocyanatgruppenhaltige Verbindung (B), wobei es erfindungswesentlich ist, dass ein Teil der Isocyanatgruppen der Verbindung (B) mit einer Mischung aus einem Bisalkoxylsilylamin (Ia), bevorzugt Bis[3-(trimethoxysilyl)propyl]amin, und einem Monoalkoxysilylamin (IIa), bevorzugt N-[3-(trimethoxysilyl)propyl]butylamin, umgesetzt ist.

Als hydroxylgruppenhaltige Verbindung werden in Beschichtungsmitteln der WO 2008/074491 und der WO 2008/074489 Polyesterpolyole, Polyurethanpolyole, Polysiloxanpolyole und bevorzugt Polyacrylatpolyole und/- oder Polymethacrylatpolyole eingesetzt. Die in der WO 2008/074491 und der WO 2008/074489 beschriebenen Beschichtungsmittel sollen jedoch hinsichtlich der optischen Eigenschaften, insbesondere hinsichtlich des Appearance, noch weiter verbessert werden.

Es ist bekannt, dass die Verwendung von Polyester-Bindemitteln im Vergleich zu Poly(meth)acrylat-Bindemitteln aufgrund der verbesserten Verträglichkeit mit Standard-Vernetzern häufig zu einer Verbesserung der optischen Eigenschaften der resultierenden Beschichtung führt. Allerdings führt die Verwendung von Polyester-Bindemitteln gleichzeitig oft zu einer Verschlechterung der Härte und der Kratzfestigkeit sowie der Chemikalien- und Säurebeständigkeit der resultierenden Beschichtung. Insbesondere die Anfangshärte direkt nach der Aushärtung ist häufig zu niedrig, so dass sich hinsichtlich der Verarbeitbarkeit, insbesondere im Schleif- und Polierprozess Schwierigkeiten ergeben können.

Die WO 03/093343 A1 beschreibt hochfunktionelle, hyperverzweigte, hydroxyfunktionelle Polyester, die in Beschichtungen und Lacken eingesetzt werden können. Die dort beschriebenen hochfunktionellen hyperverzweigten Polyester sind jedoch molekular und strukturell uneinheitlich, so dass sie zwar mit geringem Aufwand herstellbar sind, jedoch nur bedingt zur Erzelung einen hohen Festkörperanteils unter gleichzeitiger Vermittlung guter optischer Eigenschaften in Beschichtungszusammensetzungen eingesetzt werden können. Weiterhin sind die dort beschriebenen Polyester nicht allgemein verträglich mit unpolaren, aprotischen Lösungsmitteln.

EP 991 690 B1 beschreibt ein Verfahren zur Synthese polymerer Polyalkohole, die im wesentlichen aus Polyestereinheiten aufgebaut sind, das hyperverzweigte, dendritische Polyester mit ungeschützten oder geschützten Hydroxyl-Endgruppen zur Verfügung stellt. Die Produkte nach dem Verfahren können mit verschiedenen Gruppen terminiert bzw. funktionalisiert werden. Ein Verwendungszweck der nach dem beschriebenen Verfahren herzustellenden Polyester wird nicht angegeben.

Schließlich sind in WO 2005/11 86 77 A1 und in der noch nicht veröffentlichten deutschen Patentanmeldung DE 102007026722.5-43 Beschichtungsmittel beschrieben, die mindestens einen hyperverzweigten, dendritischen hydroxyfunktionellen Polyester mit einer OH-Zahl ≥ 180 mg KOH/g gemessen über DIN 53240, sowie Polyisocyanate als Vernetzungsmittel enthalten. Die Verwendung von Isocyanaten, die zumindest teilweise hydrolysierbare Silangruppen enthalten, ist in dieser Schrift jedoch nicht beschrieben.

### Aufgabe

Der vorliegenden Erfindung lag daher die Aufgabe zugrunde, Beschichtungsmittel, insbesondere für die Klarlackschicht bei OEM-Serienlackierungen und bei Automobilreparaturlackierungen, zur Verfügung zu stellen, die zu Beschichtungen mit einer hohen Kratzbeständigkeit bei einer gleichzeitig guten Säureresistenz und einer guten Witterungsstabilität sowie gleichzeitig einem sehr guten optischen Gesamteindruck (sogenanntem sehr gutem Appearance) führen.

Es sollten daher Beschichtungsmittel zur Verfügung gestellt werden, die zu einem hochgradig witterungsstabilen Netzwerk führen und die gleichzeitig eine hohe Säurefestigkeit gewährleisten. Daneben sollen die Beschichtungsmittel zu Beschichtungen führen, welche schon direkt nach der thermischen Härtung hochgradig kratzfest sind und insbesondere einen hohen Glanzerhalt nach Kratzbelastung aufweisen. Weiterhin sollten sich die Beschichtungen und Lackierungen, speziell die Klarlackierungen, auch in Schichtdicken > 40 µm herstellen lassen, ohne dass Spannungsrisse auftreten. Dies ist eine wesentliche Voraussetzung für die Verwendung der Beschichtungen und Lackierungen, insbesondere der Klarlackierungen, in dem technologisch und ästhetisch besonders anspruchsvollen Gebiet der Automobilserienlackierung (OEM). Insbesondere sollten Klarlackierungen mit hoher Beständigkeit, besonders gegen Rissbildung, bei Bewitterung mit UV-Strahlung im Feucht-Trockenzyklus in Kombination mit ausgezeichneter Kratzfestigkeit zur Verfügung gestellt werden.

Gleichzeitig sollten die Beschichtungsmittel aber auch einen guten Verlauf zeigen und zu Beschichtungen mit einem guten optischen Gesamteindruck führen. Zur Messung des Oberflächenprofils der applizierten, eingebrannten Lackfilme wurde die Wavescan - Methode eingesetzt, die es gestattet, das sichtbare Profil von Lackfilmoberflächen zu vermessen. Hierzu wurde die Intensität der Reflektion ("Welligkeit") mittels des Gerätes "Wave Scan" der Firma Byk - Gardner gemessen, wobei auf einer Strecke von 10 cm 1250 Messpunkte aufgenommen wurden. Die Reflektion wird vom Messgerät in Langwelligkeit ("Long Wave"), d. h. die Varianz der Lichtintensität für Strukturen im Bereich von 0,6 mm bis 10 mm sowie in Kurzwelligkeit, d. h. die Varianz der Lichtintensität für Strukturen im Bereich von 0,1 mm bis 0,6 mm, unterteilt. Für einen guten visuellen Eindruck sind insbesondere niedrige Long Wave Messwerte der resultierenden Beschichtungen bei möglichst niedrigen Schichtdicken entscheidend.

### Lösung der Aufgabe

Im Lichte der obengenannten Aufgabenstellung wurden Beschichtungsmittel auf Basis aprotischer Lösemittel gefunden, enthaltend
(a) mindestens eine hydroxylgruppenhaltige Verbindung (A),
(b) mindestens eine gesättigte Verbindung (B) mit freien und/oder blockierten Isocyanatgruppen, die zumindest teilweise hydrolysierbare Silangruppen enthält, und
(c) mindestens einen Katalysator (D) für die Vernetzung von Silangruppen,
dadurch gekennzeichnet, dass das Beschichtungsmittel als hydroxylgruppenhaltige Verbindung (A) mindestens einen hyperverzweigten, dendritischen hydroxyfunktionellen Polyester enthält, bei dem im Mittel mindestens eine Hydroxylfunktion des Polyesters mit mindestens einer Säure ausgewählt aus der Gruppe der isomeren C8- bis C9-Monocarbonsäuren verestert ist.

Im Hinblick auf den Stand der Technik war es überraschend und für den Fachmann nicht vorhersehbar, dass die Aufgaben, die der vorliegenden Erfindung zugrunde lagen, mit Hilfe des erfindungsgemäßen Beschichtungsmittels auf Basis aprotischer Lösemittel gelöst werden konnten.

So ist es insbesondere überraschend, dass die erfindungsgemäßen Beschichtungsmittel neue Beschichtungen und Lackierungen, speziell Klarlackierungen, liefern, die hoch kratzfest sind und im Gegensatz zu gängigen hochvernetzten kratzfesten Systemen säureresistent sind. Weiterhin lassen sich die erfindungsgemäßen Beschichtungen und Lackierungen, speziell die Klarlackierungen, auch in Schichtdicken > 40 µm herstellen, ohne dass Spannungsrisse auftreten. Deswegen können die erfindungsgemäßen Beschichtungen und Lackierungen, insbesondere die Klarlackierungen, in dem technologisch und ästhetisch besonders anspruchsvollen Gebiet der Automobilserienlackierung (OEM) eingesetzt werden. Dabei zeichnen sie sich durch eine besonders hohe Waschstraßenbeständigkeit und Kratzfestigkeit aus. Insbesondere ist die hohe Kratzfestigkeit der Beschichtungen direkt nach der Endhärtung der Beschichtungen gegeben, so dass die Beschichtungen direkt im Anschluss an die Endhärtung problemlos gehandhabt werden können. Außerdem ist die Beständigkeit der erfindungsgemäßen Beschichtungen gegen Rissbildung bei UV-Strahlung und Feucht-Trockenwechsel im CAM180-Test (nach DIN EN ISO 11341 Feb 98 und DIN EN ISO 4892-2 Nov 00) in Kombination mit einer hohen Kratzfestigkeit ausgezeichnet.

Ferner ist es überraschend, dass die Beschichtungsmittel gleichzeitig auch zu Beschichtungen mit einem guten optischen Gesamteindruck führen. Zur Messung des Oberflächenprofils der applizierten, eingebrannten Lackfilme wurde die Wavescan - Methode eingesetzt, die es gestattet, das sichtbare Profil von Lackfilmoberflächen zu vermessen. Hierzu wurde die Intensität der Reflektion ("Welligkeit") mittels des Gerätes "Wave Scan" der Firma Byk - Gardner gemessen, wobei auf einer Strecke von 10 cm 1250 Messpunkte aufgenommen wurden. Die Reflektion wird vom Messgerät in Langwelligkeit ("Long Wave"), d. h. die Varianz der Lichtintensität für Strukturen im Bereich von 0,6 mm bis 10 mm sowie in Kurzwelligkeit, d. h. die Varianz der Lichtintensität für Strukturen im Bereich von 0,1 mm bis 0,6 mm, unterteilt. Für einen guten visuellen Eindruck sind insbesondere niedrige Long Wave Messwerte der resultierenden Beschichtungen bei möglichst niedrigen Schichtdicken entscheidend. Die erfindungsgemäßen Beschichtungen zeichnen sich nun sowohl durch niedrige "Long Wave" als auch durch niedrige "Short Wave" Werte aus.

Schließlich können die erfindungsgemäßen Komponenten besonders einfach und sehr gut reproduzierbar hergestellt werden und bereiten bei der Lackapplikation keine signifikanten toxikologischen und ökologischen Probleme.

### Beschreibung der Erfindung

### Die hyperverzweigten, dendritischen hydroxyfunktionellen Polyester (A)

Es ist erfindungswesentlich, dass die erfindungsgemäßen Beschichtungsmittel mindestens einen hyperverzweigten, dendritischen hydroxyfunktionellen Polyester enthalten. Hyperverzweigte, dendritische Verbindungen, d.h. hyperverzweigte, dendritische Makromoleküle und Dendrimere, können allgemein als dreidimensionale, hochverzweigte Moleküle mit einer baumartigen Struktur beschrieben werden. Dendrimere sind hochsymmetrisch, während ähnliche Makromoleküle, die als hyperverzweigt und/oder dendritisch bezeichnet werden, in einem bestimmten Maß asymmetrisch sein können und dennoch die hochverzweigte baumartige Struktur beibehalten. Hyperverzweigte und dendritische Makromoleküle können üblicherweise ausgehend von einem Initiator oder Nukleus mit einer oder mehreren reaktiven Stellen und einer Zahl von Verzweigungsschichten ("Generationen") und gegebenenfalls einer Schicht von kettenbeendigenden Molekülen hergestellt werden (divergenter Syntheseansatz). Die fortgesetzte Replikation von Verzweigungsschichten ergibt normalerweise eine erhöhte Verzweigungsmultiplizität und gegebenenfalls oder gewünschtenfalls eine erhöhte Zahl von Endgruppen, Die Schichten werden üblicherweise Generationen und die Zweige Dendrone genannt.

Zur Erreichung optimaler Ergebnisse ist es erfindungswesentlich, dass im Mittel mindestens eine Hydroxylfunktion des hyperverzweigten, dendritischen hydroxyfunktionellen Polyesters mit mindestens einer Säure ausgewählt aus der Gruppe der isomeren C8-C9-Monocarbonsäuren verestert ist. Insbesondere kann so ein zufrieden stellender Restglanz erreicht werden. Die vorgenannt beschriebene Veresterung mit mindestens einer C8-C9-Carbonsäure wird auch synonym als "Säuremodifikation" bezeichnet.

Vorzugsweise ist der Rest der isomeren C8-C9-Monocarbonsäure gesättigt. Derartige Klarlackzusammensetzungen weisen eine gute Witterungsstabilität auf.

Besonders vorteilhafte Eigenschaften im Sinne der Erfindung resultieren, wenn der Rest der C8-C9-Monocarbonsäure der Rest von Octansäure oder Isononansäure ist. Besonders bevorzugt wird als C8-C9-Monocarbonsäure Isononansäure eingesetzt.

Der Polyester in derartigen Klarlackzusammensetzungen weist bevorzugt eine Hydroxylzahl von ≥ 180 mg KOH/g, insbesondere eine Hydroxylzahl von > 180 mg KOH/g, bevorzugt 185 - 240 mg KOH/g bestimmt gemäß DIN 53240 auf. Insbesondere werden Polyester eingesetzt, die eine Hydroxyfunktionalität (gegeben über die Anzahl der freien und der veresterten Hydroxylgruppen des hydroxyfunktionellen Polyesters) von größer als 16 aufweisen. Derartige Klarlackzusammensetzungen verfügen über eine ausreichende Mikrohärte (d.h. > 90 N/mm2, bestimmt gemäß DIN EN ISO 14577 mit Hilfe des Fischerscope Messgerätes der Firma Fischer mit einer maximalen Kraft von 25,6 mN), sind kratzfest und chemikalienbeständig.

Der Polyester weist bevorzugt eine Säurezahl ≤ 8,0, bevorzugt 0 - 6,0 bestimmt gemäß DIN 53402 auf. Solche Säurezahlen der Polyester in den beschriebenen Klarlackformulierungen führen zu einer besseren Verträglichkeit dieser Polyester mit anderen Lackrohstoffen und zu einem verbesserten Verlauf.

Der Polyester verfügt weiterhin bevorzugt über ein zahlenmittleres Molekulargewicht von 1500 - 4000 g/mol, bevorzugt 2000 - 3500 g/mol bestimmt über GPC mit einem Polystyrolstandard in THF mit 0,1 mol/l Essigsäure. Ein solches niedriges Molekulargewicht kombiniert mit einer entsprechend engen Molekulargewichtsverteilung des dendritischen Polyesters führt allgemein zu einer besseren Verträglichkeit.

Vorzugsweise werden Polyester mit einer Polydispersität Mw/Mn < 4 eingesetzt. Besonders gute Eigenschaften resultieren dabei, wenn der Polyester eine noch kleinere Polydispersität aufweist, d.h. Mw/Mn < 2,5, insbesondere Mw/Mn ≤ 2,0.

Besonders bevorzugt werden monodisperse oder im wesentlichen monodisperse Polyester eingesetzt, die sich einfach, verlässlich und reproduzierbar herstellen lassen und deren Eigenschaften und Endstrukturen leicht und komfortabel angepasst werden können.

Derartige Polyester können hergestellt werden über eine partielle Veresterung eines hydroxyfunktionellen Polyesters, der wiederum herstellbar ist über ein Verfahren zur Synthese eines dendritischen polymeren Polyalkohols (Polyesterpolyol) mit reaktiven und gegebenenfalls geschützten Hydroxylendgruppen gemäß EP 991 690 B1,
- wobei der polymere Polyalkohol n dendritische Zweige besitzt, die von einem monomeren oder polymeren Initiatormolekül mit n reaktiven Gruppen (A1) entspringen, wobei jeder Zweig g Verzweigungsgenerationen umfasst, wobei jede Generation mindestens einen polymeren oder monomeren Verzweigungskettenverlängerer mit drei funktionellen Gruppen, von denen mindestens zwei reaktive Hydroxylgruppen (A2) sind und eine eine Carboxylgruppe (A3) ist, die mit der reaktiven Gruppe (A1) und/oder den Hydroxylgruppen (A2) reaktiv ist, umfasst, und gegebenenfalls mindestens eine Abstandhaltergeneration, die mindestens einen Abstandhalterkettenverlängerer mit zwei funktionellen Gruppen, von denen eine geschützte Hydroxylgruppe (A2") und eine eine Gruppe (A4) ist, die mit einer Hydroxylgruppe reaktiv ist, umfasst, wobei n und g ganze Zahlen und mindestens 1 sind,
- wobei (i) die zwei Hydroxylgruppen (A2) des verwendeten monomeren oder polymeren Kettenverzweigungsverlängerers acetalgeschützte Hydroxylgruppen (A2') sind, wobei der Schutz durch Acetal erhalten wird durch eine Reaktion zwischen den zwei Hydroxylgruppen (A2) und einer acetalbildenden Carbonylverbindung; und
- (ii) eine erste Verzweigungsgeneration zum Initiatormolekül hinzugefügt wird durch Reaktion zwischen der reaktiven Gruppe (A1) und der Carboxylgruppe (A3) in einem molaren Verhältnis der reaktiven Gruppen (A1) zu den Carboxylgruppen (A3) von mindestens 1, wodurch ein polymerer Polyalkohol mit acetalgeschützten Hydroxylgruppen (A2') und n dendritischen Zweigen, die eine Generation umfassen, erhalten wird, wobei die acetalgeschützten Hydroxylgruppen (A2') gegebenenfalls mittels Acetalspaltung entschützt werden, wodurch ein polymerer Polyalkohol mit reaktiven Hydroxylgruppen (A2) erhalten wird; und wobei
- (iii) weitere Verzweigungsgenerationen hinzugefügt werden in g-1 wiederholten Schritten durch Reaktion zwischen reaktiven Hydroxylgruppen (A2), die durch Entschützung mittels Acetalspaltung erhalten werden, und Carboxylgruppen (A3) in einem molaren Verhältnis von Hydroxylgruppen (A2) zu Carboxylgruppen (A3) von mindestens 1, wodurch ein polymerer Polyalkohol mit acetalgeschützten Hydroxylgruppen (A2') und n dendritischen Zweigen, die zwei oder mehr Generationen umfassen, erhalten wird, wobei die acetalgeschützten Hydroxylgruppen (A2') gegebenenfalls mittels Acetalspaltung entschützt werden, wodurch ein polymerer Polyalkohol mit reaktiven Hydroxylgruppen (A2) erhalten wird, und
- gegebenenfalls (iv) auf Schritt (ii) und/oder jede Wiederholung von Schritt (iii) einzeln
   (a) eine teilweise Schützung, wie beispielsweise Schützung als Acetal, Ketal und/oder Ester von verfügbaren reaktiven Hydroxylgruppen (A2), wodurch ein polymerer Polyalkohol mit mindestens einer reaktiven Hydroxylgruppe (A2) für die Verwendung in Schritt (iii) oder in einem wiederholten Schritt (ii) erhalten wird, und/oder
   (b) der Zusatz des optionalen Abstandshalterkettenverlängerers, was nach Entschützung der geschützten Hydroxylgruppe (A2") einen polymeren Polyalkohol mit reaktiven Hydroxylgruppen (A2) für die Verwendung in Schritt (iii) oder einem wiederholten Schritt (iii) und n dendritische Zweige ergibt, die eine oder mehrere Verzweigungsgenerationen umfassen, und mindestens eine Abstandshaltergeneration zumindest eine Teilgeneration ist; folgt.

Die erfindungsgemäßen Beschichtungsmittel können neben den erfindungswesentlichen hyperverzweigten, dendritischen hydroxyfunktionellen Polyestern (A) ggf. noch weitere hydroxylgruppenhaltige Verbindungen (C) enthalten. Als weitere hydroxylgruppenhaltige Verbindungen (C) können sowohl niedermolekulare Polyole als auch oligo- und/oder polymere Polyole eingesetzt werden. Besonders bevorzugt sind als Komponente (C) von der Komponente (A) verschiedene Polyesterpolyole, Polyurethanpolyole, Polysiloxanpolyole und insbesondere Polyacrylatpolyole und/oder Polymethacrylatpolyole sowie deren Mischpolymerisate, im folgenden Polyacrylatpolyole genannt. Diese optionalen Verbindungen (C) werden im Allgemeinen in einer Menge von 0 bis 30 Gew.-%, bezogen auf das Gesamtgewicht des Beschichtungsmittels, eingesetzt.

### Die isocyanatgruppenhaltigen Verbindungen (B)

Die als Grundkörper für die erfindungsgemäß bevorzugt eingesetzten isocyanatgruppenhaltigen Verbindungen (B) dienenden Di- und/oder Polyisocyanate sind bevorzugt an sich bekannte gesättigte substituierte oder unsubstituierte aromatische, aliphatische, cycloaliphatische und/oder heterocyclische Polyisocyanate. Beispiele für bevorzugte Polyisocyanate sind: 2,4-Toluoldiisocyanat, 2,6-Toluoldiisocyanat, Diphenylmethan-4,4'-diisocyanat, Diphenylmethan-2,4'-diisocyanat, p-Phenylendiisocyanat, Biphenyldiisocyanate, 3,3'-Dimethyl-4,4'-diphenylendiisocyanat, Tetramethylen-1,4-diisocyanat, Hexamethylen-1,6-diisocyanat, 2,2,4-Trimethylhexane-1,6-diisocyanat, Isophorondiisocyanat, Ethylendiisocyanat, 1,12-Dodecandiisocyanat, Cyclobutan-1,3-diisocyanat, Cyclohexan-1,3-diisocyanat, Cyclohexan-1,4-diisocyanat, Methylcyclohexyldiisocyanate, Hexahydrotoluol-2,4-diisocyanat, Hexahydrotoluol-2,6-diisocyanat, Hexahydrophenylen-1,3-diisocyanat, Hexahydrophenylen-1,4-diisocyanat, Perhydrodiphenylmethan-2,4'-diisocyanat, 4,4'-Methylendicyclohexyldiisocyanat (z.B. Desmodur ® W der Fa. Bayer AG), Tetramethylxylyldiisocyanate (z.B. TMXDI ® der Fa. American Cyanamid) und Mischungen der vorgenannten Polyisocyanate. Weiterhin bevorzugte Polyisocyanate sind die Biuret-Dimere und die Isocyanurat-Trimere der vorgenannten Diisocyanate.

Besonders bevorzugte Polyisocyanate PI sind Hexamethylen-1,6-diisocyanat, Isophorondiisocyanat und 4,4'-Methylendicyclohexyldiisocyanat, deren Biuret-Dimere und/oder Isocyanurat-Trimere.

In einer weiteren Ausführungsform der Erfindung sind die Polyisocyanate Polyisocyanat-Präpolymerisate mit Urethan-Struktureinheiten, welche durch Umsetzung von Polyolen mit einem stöchiometrischen Überschuss an vorgenannten Polyisocyanaten erhalten werden. Solche Polyisocyanat-Präpolymere sind beispielsweise in US-A-4,598,131 beschrieben.

Es ist erfindungswesentlich, dass die isocyanatgruppenhaltige Verbindung (B) zumindest teilweise hydrolysierbare Silangruppen enthält. Diese hydrolysierbaren Silangruppen führen zum Aufbau des Si-O-Si Netzwerkes, welches in der endgehärteten Beschichtung statistisch verteilt ist. Dies bedeutet, dass es zu keiner gezielten Anreicherung oder Abreicherung des Si-O-Si Netzwerkes in bestimmten Bereichen der Beschichtung kommt.

Es ist bevorzugt, dass die Verbindung (B)
zwischen 2,5 und 97,5 mol-%, bezogen auf die Gesamtheit der Struktureinheiten (I) und (I), mindestens einer Struktureinheit der Formel (I)

-N(X-SiR"x(OR')3-x)n(X'-SiR"y(OR')3-y)m (I)

wobei
R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R' = Ethyl und/oder Methyl
X,X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
n = 0 bis 2, m = 0 bis 2, m+n = 2 , sowie x,y = 0 bis 2,
und
zwischen 2,5 und 97,5 mol-%, bezogen auf die Gesamtheit der Struktureinheiten (I) und (II), mindestens einer Struktureinheit der Formel (II)

Z-(X-SiR"x(OR')3-x) (II),

wobei
Z = -NH-, -NR-, mit
R = Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl ,
x = 0 bis 2, und
X, R', R" die bei Formel (I) angegebene Bedeutung haben,
aufweist.

Im erfindungsgemäßen Beschichtungsmittel weist die im vorstehenden Absatz beschriebene Verbindung (B) vorzugsweise zwischen 5 und 95 mol-%, insbesondere zwischen 10 und 90 mol-%, besonders bevorzugt zwischen 20 und 80 mol-%, und ganz besonders zwischen 30 und 70 mol-%, jeweils bezogen auf die Gesamtheit der Struktureinheiten (I) und (II), mindestens einer Struktureinheit der Formel (I) und zwischen 5 und 95 mol-%, insbesondere zwischen 10 und 90 mol-%, besonders bevorzugt zwischen 20 und 80 mol-%, und ganz besonders zwischen 30 und 70 mol- %, jeweils bezogen auf die Gesamtheit der Struktureinheiten (I) und (II), mindestens einer Struktureinheit der Formel (II), auf.

Im erfindungsgemäßen Beschichtungsmittel sind die Strukturelemente (I) und (II) der in den beiden vorstehenden Absätzen genannten Verbindungen (B) vorzugsweise in Anteilen von 2,5 bis 97,5 mol-%, bevorzugt von 5 bis 95 mol-%, besonders bevorzugt zwischen 10 und 90 mol-%, jeweils bezogen auf die Summe der für die Vernetzung im Beschichtungsmittel maßgeblichen funktionellen Gruppen, gebildet aus den Anteilen der Hydroxyl- und Isocyanatgruppen sowie den Anteilen der Strukturelemente (I) und (II), vorhanden.

Die jeweiligen bevorzugten Alkoxyreste (OR') können gleich oder verschieden sein, entscheidend für den Aufbau der Reste ist jedoch, inwiefern diese die Reaktivität der hydrolysierbaren Silangruppen beeinflussen. Bevorzugt ist R' ein Alkylrest, insbesondere mit 1 bis 6 C-Atomen. Besonders bevorzugt sind Reste R', die die Reaktivität der Silangruppen erhöhen, d.h. gute Abgangsgruppen darstellen. Insofern ist ein Methoxy - Rest gegenüber einem Ethoxy - Rest und dieser wiederum gegenüber einem Propoxyrest bevorzugt. Besonders bevorzugt ist daher R' = Ethyl und/oder Methyl, insbesondere Methyl.

Des Weiteren kann die Reaktivität von organofunktionellen Silanen auch durch die Länge der Spacer X zwischen Silan - Funktionalität und organischer funktioneller Gruppe, die zur Reaktion mit dem modifizierenden Bestandteil dient, erheblich beeinflusst werden. Beispielhaft dafür seien die "alpha" - Silane genannt, die bei der Firma Wacker erhältlich sind, und bei denen eine Methylengruppe anstelle der bei gamma"-Silane vorhandenen Propylengruppe zwischen Si-Atom und funktioneller Gruppe ist.

Die efindungsgemäß besonders bevorzugten mit den Struktureinheiten (I) und (II) funktionalisierten isocyanatgruppenhaltigen Verbindungen (B) werden besonders bevorzugt durch Umsetzung der vorgenannten Di- und/oder Polyisocyanate mit einer Verbindung der Formel (Ia)

HN(X-SiR"x(OR')3-x)n(X'-SiR"y(OR')3-y)m (la),

und einer Verbindung der Formel (IIa)

H-Z-(X-SiR"x(OR')3-x) (IIa),

erhalten, wobei die Substituenten die obengenannte Bedeutung haben.

Erfindungsgemäß bevorzugte Verbindungen (Ia) sind Bis(2-ethyltrimeth-oxysilyl)amin, Bis(3-propyltrimethoxysilyl)amin, Bis(4-butyltrimethoxysilyl)-amin, Bis(2-ethyltriethoxysilyl)amin, Bis(3-propyltriethoxysilyl)amin und/- oder Bis(4-butyltriethoxysilyl)amin. Ganz besonders bevorzugt ist Bis(3-propyltrimethoxysilyl)amin. Solche Aminosilane sind beispielsweise unter dem Markennamen DYNASILAN ® der Fa. DEGUSSA bzw. Silquest ® der Fa. OSI verfügbar.

Erfindungsgemäß bevorzugte Verbindungen (IIa) sind Aminoalkyl-trialk-oxysilane, wie vorzugsweise 2-Aminoethyltrimethoxysilan, 2-Aminoethyl-triethoxysilan, 3-Aminopropyltrimethoxysilan, 3-Aminopropyltriethoxysilan, 4-Aminobutyltrimethoxysilan, 4-Aminobutyltriethoxysilan. Besonders bevorzugte Verbindungen (IIa) sind N-(2- (trimethoxysilyl)ethyl)alkylamine, N-(3-(trimethoxysilyl)propyl)alkylamine, N-(4-(trimethoxysilyl)butyl) alkylamine, N-(2-(triethoxysilyl)ethyl)alkylamine, N-(3-(triethoxysilyl)propyl)-alkylamine und/oder N-(4-(triethoxysilyl)butyl)alkylamine. Ganz besonders bevorzugt ist N-(3-(trimethoxysilyl) propyl)butylamin. Solche Aminosilane sind beispielsweise unter dem Markennamen DYNASILAN ® der Fa. DEGUSSA bzw. Silquest ® der Fa. OSI verfügbar.

Die erfindungsgemäß ganz besonders bevorzugten mit den Struktureinheiten (I) und (II) funktionalisierten isocyanatgruppenhaltigen Verbindungen (B) werden besonders bevorzugt durch Umsetzung der vorgenannten Di- und/oder Polyisocyanate mit den vorgenannten Verbindungen (Ia) und (IIa) hergestellt, indem
zwischen 2,5 und 90 mol-%, bevorzugt 5 bis 85 mol-%, besonders bevorzugt 7,5 bis 80 mol-%, der Isocyanatgruppen im Polyisocyanatgrundkörper mit mindestens einer Verbindung (Ia) und
zwischen 2,5 und 90 mol-%, bevorzugt 5 bis 85 mol-%, besonders bevorzugt 7,5 bis 80 mol-%, der Isocyanatgruppen im Polyisocyanatgrundkörper mit mindestens einer Verbindung (IIa)
umgesetzt werden.

Der Gesamtanteil der mit den Verbindungen (la) und (IIa) umgesetzten Isocyanatgruppen liegt in der Polyisocyanatverbindung (B) zwischen 5 und 95 mol-%, bevorzugt zwischen 10 und 90 mol-%, besonders bevorzugt zwischen 15 und 85 mol-% der Isocyanatgruppen im Polyisocyanatgrundkörper.

Ganz besonders bevorzugte isocyanatgruppenhaltige Verbindungen (B) sind Umsetzungsprodukte von Hexamethylen-1,6-diisocyanat und/oder Isophorondiisocyanat, und/oder deren Isocyanurat-Trimere mit Bis(3-propyltrimethoxysilyl)amin und N-(3-(trimethoxysilyl) propyl)butylamin.

Der Festkörpergehalt des erfindungsgemäß eingesetzten Polyisocyanathärters beträgt vorteilhaft mindestens 50 Gew.-%, bevorzugt mindestens 70 Gew.-%.

Bevorzugt enthält der erfindungsgemäß eingesetzte Polyisocyanathärter wenigstens einen Wasserfänger, beispielsweise reaktive Silane mit einer höheren Reaktivität gegenüber Wasser als Isocyanate. Vorteilhaft werden als Wasserfänger insbesondere Orthoameisensäuretrialkylester verwendet. Als Wasserfänger wird besonders bevorzugt Triethylorthoformiat verwendet. Vorzugsweise werden 0,01 Gew.-% bis 10 Gew.-%, bevorzugt 0,03 Gew.-% bis 5,0 Gew.-%, mindestens eines Wasserfängers bezogen auf den Gesamtgehalt des Beschichtungsmittels an nichtflüchtigen Anteilen, zugesetzt.

Die Umsetzung der isocyanatgruppenhaltigen Verbindungen (B) mit den Verbindungen (Ia) und (IIa) erfolgt vorzugsweise in Inertgasatmosphäre bei Temperaturen von maximal 100 °C, bevorzugt von maximal 60 °C. Bevorzugt erfolgt die Umsetzung der isocyanatgruppenhaltigen Verbindungen (B) mit den Verbindungen (Ia) und (IIa) in einem Lösemittel oder in einem Lösemittelgemisch in Gegenwart wenigstens eines Wasserfängers und in Gegenwart wenigstens eines Amins, bevorzugt in Gegenwart mindestens eines tertiären Amins, wie beispielsweise 1,4-Diazabicyclo[2.2.2]octan (DABCO), Triethylamin und Diisopropylethylamin, insbesondere Triethylamin.

Bevorzugt werden während der Synthese mindestens 1 Gew.-%, bevorzugt mindestens 2 Gew.-%, besonders bevorzugt mindestens 3 Gew.-% und ganz besonders bevorzugt mindestens 4 Gew.-% mindestens eines Wasserfängers, bevorzugt Triethylorthoformiat, bezogen auf den Gesamtgehalt der Reaktionsmischung an nichtflüchtigen Anteilen, zugesetzt.

Bevorzugt wird das Amin während der Synthese in einer Menge von 2 bis 6 Gew.-%, bezogen auf Gesamtgehalt der Reaktionsmischung an nichtflüchtigen Anteilen, eingesetzt. Besonders bevorzugt wird Triethylamin während der Synthese in einer Menge von 1,5 bis 3,5 Gew.-%, bezogen auf den Gesamtgehalt der Reaktionsmischung an nichtflüchtigen Anteilen, eingesetzt.

Das Lösemittel bzw. Lösemittelgemisch, in dem die Polyisocyanathärter hergestellt werden, kann aus aromatischen Kohlenwasserstoffen wie 1,2,4-Trimethylbenzol, Mesitylen, Xylol, Propylbenzol und Isopropylbenzol bestehen. Ein Beispiel für ein geeignetes Lösemittelgemisch aus aromatischen Kohlenwasserstoffen ist Solventnaphtha. Das Lösemittel, in dem die Polyisocyanathärter hergestellt werden, kann auch aus aliphatischen Kohlenwasserstoffen, Ketonen, wie Aceton, Methylethylketon oder Methylamylketon, Estern, wie Ethylacetat, Butylacetat, Pentylacetat oder Ethylethoxypropionat, Ether oder Mischungen aus den vorgenannten Lösemitteln bestehen, wobei Lösemittelgemische mit einem hohen Anteil an Butylacetat, insbesondere mindestens 60 Gew.-% Butylacetat, bezogen auf das Gesamtgewicht des Lösemittelgemisches, bevorzugt sind. Besonders bevorzugt enthält das Lösemittelgemisch mindestens 80 Gew.-% Butylacetat, insbesondere mindestens 95 Gew.-% Butylacetat. Ganz besonders vorteilhaft wird in reinem Butylacetat gearbeitet.

Alternativ kann der Polyisocyanathärter auch bevorzugt dadurch hergestellt werden, dass in einem ersten Schritt im Mittel pro Molekül maximal eine der Isocyanatgruppen des Polyisocyanates mit dem aminofunktionellen Alkoxysilan umgesetzt wird und in einem zweiten Schritt das erhaltene Zwischenprodukt durch Dimerisierung, Trimerisierung, Urethan-, Biuret- oder Allophanatbildung zu einem Polyisocyanat umgesetzt wird.

Die freien Isocyanatgruppen des isocyanatgruppenhaltigen Verbindungen B können auch in blockierter Form eingesetzt werden. Dies ist bevorzugt dann der Fall, wenn die erfindungsgemäßen Beschichtungsmittel als einkomponentige Systeme eingesetzt werden. Zur Blockierung kann im Prinzip jedes für die Blockierung von Polyisocyanaten einsetzbare Blockierungsmittel mit einer ausreichend tiefen Deblockierungstemperatur eingesetzt werden. Derartige Blockierungsmittel sind dem Fachmann gut geläufig. Bevorzugt werden Blockierungsmittel, wie sie in EP-A-0 626 888 und EP-A-0 692 007 beschrieben sind, eingesetzt.

### Der Katalysator (D)

Es ist erfindungswesentlich, dass die erfindungsgemäßen Beschichtungsmittel mindestens einen Katalysator (D) für die Vernetzung der Silangruppen enthalten. Beispiele sind Metallkomplexe mit Chelatliganden auf der Basis von Zink oder Aluminium, wie die z.B. in der WO05/03340 beschriebenen Titanate oder Lewis-Säuren, wobei aber bei der Auswahl der Katalysatoren darauf zu achten ist, dass die Katalysatoren nicht zu einer Vergilbung der Beschichtungsmittel führen. Außerdem sind einige bekanntermaßen eingesetzte Katalysatoren aus toxikologischen Gründen weniger erwünscht.

Es ist daher bevorzugt, dass als Katalysator (D) phosphorhaltige, insbesondere phosphorhaltige und stickstoffhaltige Katalysatoren eingesetzt werden. Dabei können auch Mischungen aus zwei oder mehreren verschiedenen Katalysatoren (D) eingesetzt werden.

Beispiele für geeignete phosphorhaltige Katalysatoren (D) sind substituierte Phosphonsäurediester und Diphosphonsäurediester, vorzugsweise aus der Gruppe, bestehend aus acyclischen Phosphonsäurediestem, cyclischen Phosphonsäurediestern, acyclischen Diphosphonsäurediestem und cyclischen Diphosphonsäurediestem. Derartige Katalysatoren sind beispielsweise in der deutschen Patentanmeldung DE-A-102005045228 beschrieben..

Insbesondere werden aber substituierte Phosphorsäuremonoester und Phosphorsäurediester, vorzugsweise aus der Gruppe, bestehend aus acyclischen Phosphorsäurediestem und cyclischen Phosphorsäurediestem, besonders bevorzugt Aminaddukte der Phosphorsäure-mono- und -di-ester, eingesetzt. Dabei werden die acyclischen Phosphorsäurediester (D) insbesondere aus der Gruppe, bestehend aus acyclischen Phosphorsäurediestem (D) der allgemeinen Formel (IV): 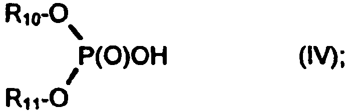 ausgewählt, wobei die Reste R₁₀ und R₁₁ aus der Gruppe, bestehend aus:
- substituiertem und unsubstituiertem Alkyl- mit 1 bis 20, vorzugsweise 2 bis 16 und insbesondere 2 bis 10 Kohlenstoffatomen, Cycloalkylmit 3 bis 20, vorzugsweise 3 bis 16 und insbesondere 3 bis 10 Kohlenstoffatomen und Aryl- mit 5 bis 20, vorzugsweise 6 bis 14 und insbesondere 6 bis 10 Kohlenstoffatomen,
- substituiertem und unsubstituiertem Alkylaryl-, Arylalkyl-, Alkylcycloalkyl-, Cycloalkylalkyl-, Arylcycloalkyl-, Cycloalkylaryl-, Alkylcycloalkylaryl-, Alkylarylcycloalkyl-, Arylcycloalkylalkyl-, Arylalkylcycloalkyl-, Cycloalkylalkylaryl-und Cycloalkylarylalkyl-, wobei die hierin enthalten Alkyl-, Cycloalkyl- und Arylgruppen jeweils die vorstehend aufgeführte Anzahl von Kohlenstoffatomen enthalten und
- substituiertem und unsubstituiertem Rest- der vorstehend aufgeführten Art, enthaltend mindestens ein, insbesondere ein, Heteroatom, ausgewählt aus der Gruppe bestehend aus Sauerstoffatom, Schwefelatom, Stickstoffatom, Phosphoratom und Siliziumatom, insbesondere Sauerstoffatom, Schwefelatom und Stickstoffatom
ausgewählt werden und zusätzlich auch Wasserstoff darstellen können (Teilversterung).

Ganz besonders bevorzugt werden als Katalysator (D) die entsprechenden aminblockierten Phosphorsäureester, und hier insbesondere aminblockierte Phosphorsäureethylhexylester und aminblockierte Phosphorsäurephenylester, ganz besonders bevorzugt aminblockierte Phosphorsäure-bis(2-ethylhexyl)ester eingesetzt.

Als Beispiele für Amine, mit welchem die Phosphorsäureester blockiert werden, sind insbesondere tertiäre Amine, beispielsweise bicyclische Amine, wie z. B. Diazabicyclootan (DABCO), Diazabicyclononen (DBN), Diazabicycloundecen (DBU), Dimethyldodecylamin oder Triethylamin, zu nennen. Besonders bevorzugt werden zur Blockierung der Phosphorsäureester tertiäre Amine eingesetzt, die eine gute Wirksamkeit des Katalysators bei den Härtungsbedingungen von 140 °C gewährleisten.

Bestimmte, mit Amin blockierte Phosphorsäurekatalysatoren sind auch kommerziell erhältlich (z.B. Nacure-Typen der Fa. King Industries). Beispielsweise sei der unter der Bezeichnung Nacure 4167 von der Firma King Industries als besonders geeigneter Katalysator auf der Basis eines aminblockierten Phosphorsäureteilesters genannt.

Die Katalysatoren werden vorzugsweise in Anteilen von 0,01 bis 20 Gew.- %, besonders bevorzugt in Anteilen von 0,1 bis 10 Gew.-%, bezogen auf die nicht flüchtigen Bestandteile des erfindungsgemäßen Beschichtungsmittels, eingesetzt. Eine geringere Wirksamkeit des Katalysators kann dabei durch entsprechend höhere Einsatzmengen teilweise kompensiert werden.

Die erfindungsgemäßen Beschichtungsmittel können noch einen weiteren Amin-Katalysator auf Basis eines bicyclischen Amins, insbesondere eines ungesättigten bicyclischen Amins, enthalten. Beispiele für geeignete Amin-Katalysatoren sind 1,5-Diazabicyclo[4.3.0]non-5-en oder 1,8-Diazabicyclo[5.4.0]undec-7-en.

Diese Amin-Katalysatoren werden vorzugsweise in Anteilen von 0,01 bis 20 Gew.-%, besonders bevorzugt in Anteilen von 0,1 bis 10 Gew.-%, bezogen auf die nicht flüchtigen Bestandteile des erfindungsgemäßen Beschichtungsmittels, eingesetzt.

### Die Kombination der Komponenten A, B, ggf. C und D sowie weitere Komponenten des Beschichtungsmittels

Der Gewichtsanteil der einzusetzenden hydroxylgruppenhaltigen Polyester (A), bezogen auf den Gewichtsanteil der isocyanatgruppenhaltigen Verbindungen (B), hängt vom Hydroxyäquivalentgewicht des Polyesters und vom Äquivalentgewicht der freien Isocyanatgruppen des Polyisocyanates ab.

Im erfindungsgemäßen Beschichtungsmittel sind bevorzugt 2,5 bis 97,5 mol-%, bezogen auf die Summe der Struktureinheiten I und II, an Struktureinheiten I und 2,5 bis 97,5 mol-%, bezogen auf die Summe der Struktureinheiten I und II, an Struktureinheiten II vorhanden.

Die erfindungsgemäßen Beschichtungsmittel enthalten bevorzugt zwischen 2,5 und 97,5 Gew.-%, besonders bevorzugt zwischen 5 und 95 Gew.-%, ganz besonders bevorzugt zwischen 10 und 90 Gew.-%, insbesondere zwischen 20 und 80 Gew.-%, bezogen auf den Gehalt an nichtflüchtigen Substanzen im Beschichtungsmittel, des hydroxylgruppenhaltigen Polyesters (A) und bevorzugt zwischen 2,5 und 97,5 Gew.-%, besonders bevorzugt zwischen 5 und 95 Gew.-%, ganz besonders bevorzugt zwischen 10 und 90 Gew.-%, insbesondere zwischen 20 und 80 Gew.-%, bezogen auf den Gehalt an nichtflüchtigen Substanzen im Beschichtungsmittel, der isocyanatgruppenhaltigen Verbindungen (B).

Bezogen auf die Summe der für die Vernetzung im erfindungsgemäßen Beschichtungsmittel maßgeblichen funktionellen Gruppen, gebildet aus den Anteilen der Hydroxyl- und Isocyanatgruppen sowie den Anteilen der Strukturelemente (I) und (II), sind die Strukturelemente (I) und (II) bevorzugt in Anteilen von 2,5 bis 97,5 mol-%, besonders bevorzugt zwischen 5 und 95 mol-% und ganz besonders bevorzugt zwischen 10 und 90 mol-% vorhanden.

Um weiter verbesserte Beständigkeiten der erfindungsgemäßen Beschichtungen gegen Rissbildung bei UV-Strahlung und Feucht-Trockenwechsel im CAM180-Test (nach DIN EN ISO 11341 Feb 98 und DIN EN ISO 4892-2 Nov 00) in Kombination mit einer hohen Kratzfestigkeit direkt im Anschluss an die thermische Härtung, einen hohen Glanz und einen hohen Glanzerhalt nach Bewitterung zu gewährleisten, ist es außerdem bevorzugt, den Gehalt an Struktureinheiten (I) und/oder (II) maximal so hoch zu wählen, dass die erfindungsgemäßen Beschichtungsmittel weniger als 6,5 Massen-% Si der Struktureinheiten (I)) und/oder (II), ganz besonders maximal 6,0 Massen-% Si der Struktureinheiten (I)) und/oder (II), jeweils bezogen auf den Feststoffgehalt der Beschichtungsmittel, enthalten. Der Silangehalt in Masse-% Si wird dabei rechnerisch aus den eingesetzten Mengen an den Verbindungen (Ia) und (IIa) ermittelt.

Die Gewichtsanteile des Polyesters (A), der Verbindung (C) und des Polyisocyanates (B) werden vorzugsweise solchermaßen gewählt, dass das molare Äquivalent-Verhältnis der nicht umgesetzten Isocyanatgruppen der isocyanatgruppenhaltigen Verbindungen (B) zu den Hydroxylgruppen des Polyesters (A) und der ggf. eingesetzten Verbindung (C) zwischen 0,9:1,0 und 1,2:1,0, bevorzugt zwischen 0,95 :1,0 und 1,1:1,0 besonders bevorzugt zwischen 0,98:1,0 und 1,05:1,0 liegt.

Handelt es sich um einkomponentige Beschichtungsmittel, so werden die isocyanatgruppenhaltigen Verbindungen (B) gewählt, deren freie Isocyanatgruppen mit den oben beschriebenen Blockierungsmitteln blockiert sind.

Bei den erfindungsgemäß bevorzugten 2-komponentigen (2K) Beschichtungsmitteln wird kurz vor der Applikation des Beschichtungsmittel eine Lackkomponente, enthaltend den hydroxylgruppenhaltigen Polyester (A), ggf. (C) sowie weitere nachfolgend beschriebene Komponenten, mit einer weiteren Lackkomponente, enthaltend die isocyanatgruppenhaltige Verbindung (B) und gegebenenfalls weitere der nachfolgend beschriebenen Komponenten in an sich bekannter Weise vermischt, wobei in der Regel die Lackkomponente, die die Verbindung (A) enthält, den Katalysator sowie einen Teil des Lösemittels enthält.

Als Lösemittel für die erfindungsgemäßen Beschichtungsmittel sind insbesondere solche geeignet, die im Beschichtungsmittel chemisch inert gegenüber den Verbindungen (A), (B) und ggf. (C) sind und die auch bei der Härtung des Beschichtungsmittels nicht mit (A) und (B) reagieren. Beispiele für solche Lösemittel sind aliphatische und/oder aromatische Kohlenwasserstoffe wie Toluol, Xylol, Solventnaphtha, Solvesso 100 oder Hydrosol ® (Fa. ARAL), Ketone, wie Aceton, Methylethylketon oder Methylamylketon, Ester, wie Ethylacetat, Butylacetat, Pentylacetat oder Ethylethoxypropionat, Ether oder Mischungen aus den vorgenannten Lösemitteln. Bevorzugt weisen die aprotischen Lösemittel oder Lösemittelgemische einen Wassergehalt von maximal 1 Gew.-%, besonders bevorzugt maximal 0,5 Gew.-%, bezogen auf das Lösemittel auf. Um eine gute Appearance zu gewährleisten, wird insbesondere ein hoher Anteil an Butylacetat als Lösungsmittel, besonders bevorzugt mindestens 60 Gew.- % Butylacetat, bezogen auf das Gesamtgewicht des Lösemittelgemisches, eingesetzt. Weitere Lösungsmittel kommen zum Einsatz, um die entsprechend gewünschten Verdunstungszahlen einzustellen.

Neben den Verbindungen (A), (B) und (C) können noch weitere Bindemittel (E) eingesetzt werden, welche vorzugsweise mit den Hydroxylgruppen des Polyesters (A) und/oder mit den freien Isocyanatgruppen der Verbindung (B) und/oder mit den Alkoxysilylgruppen der Verbindungen (B) und/oder (C) reagieren und Netzwerkpunkte ausbilden können.

Beispielsweise sind als Komponente (E) Aminoplastharze und/oder Epoxydharze, verwendbar. Es kommen die üblichen und bekannten Aminoplastharze in Betracht, deren Methylol- und/oder Methoxymethylgruppen teilweise mittels Carbamat- oder Allophanatgruppen defunktionalisiert sein können. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

In der Regel werden solche Komponenten (E) in Anteilen von bis zu 40 Gew.-%, bevorzugt von bis zu 30 Gew.-%, besonders bevorzugt von bis zu 25 Gew.-%, bezogen auf die nichtflüchtigen Bestandteile des Beschichtungsmittels, eingesetzt.

Darüber hinaus kann das erfindungsgemäße Beschichtungsmittel mindestens ein übliches und bekanntes Lackadditiv (F) in wirksamen Mengen, d.h. in Mengen vorzugsweise bis zu 30 Gew.-%, besonders bevorzugt bis zu 25 Gew.-% und insbesondere bis zu 20 Gew.-%, jeweils bezogen auf die nichtflüchtigen Bestandteile des Beschichtungsmittels, enthalten.

Beispiele geeigneter Lackadditive sind:
- insbesondere UV-Absorber;
- insbesondere Lichtschutzmittel wie HALS-Verbindungen, Benztriazole oder Oxalanilide;
- Radikalfänger;
- Slipadditive;
- Polymerisationsinhibitoren;
- Entschäumer;
- Reaktiwerdünner, wie sie aus dem Stand der Technik allgemein bekannt sind, welche bevorzugt inert gegenüber den -Si(OR)3-Gruppen sind.
- Netzmittel wie Siloxane, fluorhaltige Verbindungen, Carbonsäurehalbester, Phosphorsäureester, Polyacrylsäuren und deren Copolymere oder Polyurethane;
- Haftvermittler wie Tricyclodecandimethanol;
- Verlaufmittel;
- filmbildende Hilfsmittel wie Cellulose-Derivate;
- Füllstoffe wie beispielsweise Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;
- rheologiesteuernde Additive, wie die aus den Patentschriften WO 94/22968, EP-A-0 276 501, EP-A-0 249 201 oder WO 97/12945 bekannten Additive; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorrillonit-Typs; Kieselsäuren wie Aerosile®; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäure-anhydrid-Copolymere und ihre Derivate oder hydrophob modifizierte ethoxylierte Urethane oder Polyacrylate;
- Flammschutzmittel und /oder
- die bereits oben aufgeführten Wasserfänger.

In einer weiteren Ausführungsform der Erfindung kann das erfindungsgemäße Beschichtungsmittel noch weitere Pigmente und/oder Füllstoffe enthalten und zur Herstellung pigmentierter Topcoats dienen. Die dafür eingesetzten Pigmente und/oder Füllstoffe sind dem Fachmann bekannt.

Da die aus den erfindungsgemäßen Beschichtungsmitteln hergestellten erfindungsgemäßen Beschichtungen auch auf bereits ausgehärteten Elektrotauchlackierungen, Füllerlackierungen, Basislackierungen oder üblichen und bekannten Klarlackierungen hervorragend haften, eignen sie sich neben dem Einsatz in der Automobilserien(OEM)lackierung ausgezeichnet für die Autoreparaturlackierung oder die modulare Kratzfestausrüstung von bereits lackierten Automobilkarosserien.

Die Applikation der erfindungsgemäßen Beschichtungsmittel kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airiess-Spritzen, Hochrotation, elektrostatischer Sprühauftrag (ESTA), gegebenenfalls verbunden mit Heißspritzapplikation wie zum Beispiel Hot-Air-Heißspritzen.

Die Aushärtung der applizierten erfindungsgemäßen Beschichtungsmittel kann nach einer gewissen Ruhezeit erfolgen. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Die thermische Härtung der Beschichtungsmittel weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung).

Vorteilhafterweise erfolgt die thermische Härtung bei einer Temperatur von 30 bis 200°C, besonders bevorzugt 40 bis 190°C und insbesondere 50 bis 180°C während einer Zeit von 1 min bis zu 10 h, besonders bevorzugt 2 min bis zu 5 h und insbesondere 3 min bis 3 h, wobei bei den für die Automobilreparaturlackierung angewandten Temperaturen, die bevorzugt zwischen 30 und 90°C liegen, auch längere Härtzeiten zur Anwendung kommen können.

Die erfindungsgemäßen Beschichtungsmittel liefern neue gehärtete Beschichtungen, insbesondere Lackierungen, speziell Klarlackierungen, Formteile, speziell optische Formteile, und freitragende Folien, die hoch kratzfest und insbesondere chemikalien- und witterungsstabil sind und einen sehr guten optischen Gesamteindruck aufweisen. Insbesondere lassen sich die erfindungsgemäßen Beschichtungen und Lackierungen, speziell die Klarlackierungen, auch in Schichtdicken > 40 µm herstellen, ohne dass Spannungsrisse auftreten.

Die erfindungsgemäßen Beschichtungsmittel eignen sich daher hervorragend als dekorative, schützende und/oder effektgebende, hoch kratzfeste Beschichtungen und Lackierungen von Karosserien von Fortbewegungsmitteln (insbesondere Kraftfahrzeuge, wie Motorräder, Busse, LKW oder PKW) oder von Teilen hiervon; von Bauwerken im Innen- und Außenbereich; von Möbeln, Fenstern und Türen; von Kunststoffformteilen, insbesondere CDs und Fenster; von industriellen Kleinteilen, von Coils, Containern und Emballagen; von weißer Ware; von Folien; von optischen, elektrotechnischen und mechanische Bauteilen sowie von Glashohlkörpern und Gegenständen des täglichen Bedarfs.

Insbesondere werden die erfindungsgemäßen Beschichtungsmittel und Lackierungen, insbesondere die Klarlackierungen, in dem technologisch und ästhetisch besonders anspruchsvollen Gebiet der Automobilserienlackierung (OEM) sowie der Automobilreparaturlackierung eingesetzt. Besonders bevorzugt werden die erfindungsgemäßen Beschichtungsmittel in mehrstufigen Beschichtungsverfahren eingesetzt, insbesondere bei Verfahren, bei dem auf ein gegebenenfalls vorbeschichtetes Substrat zunächst eine pigmentierte Basislackschicht und danach eine Schicht mit den erfindungsgemäßen Beschichtungsmittel aufgetragen werden. Gegenstand der Erfindung sind daher auch effekt- und/oder farbgebende Mehrschichtlackierungen aus mindestens einer pigmentierten Basislackschicht und mindestens einer darauf angeordneten Klarlackschicht, die dadurch gekennzeichnet sind, dass die Klarlackschicht aus dem erfindungsgemäßen Beschichtungsmittel hergestellt worden ist.

Es können sowohl wasserverdünnbare Basislacke als auch Basislacke auf Basis von organischen Lösemitteln eingesetzt werden. Geeignete Basislacke sind beispielsweise in der EP-A-0 692 007 und in den dort in Spalte 3, Zeilen 50ff., angeführten Dokumenten beschrieben. Bevorzugt wird der aufgebrachte Basislack zunächst getrocknet, das heißt dem Basislackfilm wird in einer Abdunstphase wenigstens ein Teil des organischen Lösemittels beziehungsweise des Wassers entzogen. Die Trocknung erfolgt vorzugsweise bei Temperaturen von Raumtemperatur bis 80°C. Nach der Trocknung wird das erfindungsgemäße Beschichtungsmittel aufgebracht. Anschließend wird die Zweischichtlackierung bevorzugt unter bei der Automobilserienlackierung angewandten Bedingungen bei Temperaturen von 30 bis 200°C, besonders bevorzugt 40 bis 190°C und insbesondere 50 bis 180°C, während einer Zeit von 1 min bis zu 10 h, besonders bevorzugt 2 min bis zu 5 h und insbesondere 3 min bis 3 h, eingebrannt, wobei bei den für die Automobilreparaturlackierung angewandten Temperaturen, die bevorzugt zwischen 30 und 90°C liegen, auch längere Härtzeiten zur Anwendung kommen können.

Die mit dem erfindungsgemäßen Beschichtungsmittel erzeugten Schichten zeichnen sich vor allem durch eine besonders hohe Chemikalien- und Witterungsbeständigkeit sowie eine sehr gute Waschstraßenbeständigkeit und Kratzfestigkeit aus und zeigen gleichzeitig einen sehr guten optischen Gesamteindruck (sehr gutes Appearance).

In einer weiteren bevorzugten Ausführungsform der Erfindung wird das erfindungsgemäße Beschichtungsmittel als transparenter Klarlack zur Beschichtung von Kunststoffsubstraten, insbesondere von transparenten Kunststoffsubstraten, eingesetzt. In diesem Fall beinhalten die Beschichtungsmittel UV-Absorber, die in Menge und Art auch auf den wirksamen UV-Schutz des Kunststoffsubstrats ausgelegt sind. Auch hier zeichnen sich die Beschichtungsmittel durch eine herausragende Kombination von Kratzfestigkeit und Witterungsstabilität bei gleichzeitig sehr gutem Appearance aus. Die solchermaßen beschichteten Kunststoffsubstrate werden vorzugsweise für den Ersatz von Glaskomponenten im Automobilbau eingesetzt, wobei die Kunststoffsubstrate bevorzugt aus Polymethylmethacrylat oder Polycarbonat bestehen.

### Beispiele

### Herstellung des erfindungsgemäßen Polyesterpolyols A1

In einem mit einem Rührer, Rückflusskühler und Wasserabscheider versehenen Reaktor werden 1215,4 Gewichtsteile Isononansäure gegeben und mit 140 Gewichtsteilen Xylol versetzt. Die Mischung wird vorsichtig unter Rühren auf 80 °C erhitzt. Dann werden 2284,6 Gewichtsteile eines dendritischen hydroxyfunktionellen Polyesters (Boltorn H 30, erhältlich von Perstorp) langsam hinzu gegeben, um Klumpenbildung zu vermeiden. Nach Zugabe wird das Reaktionsgemisch auf 200 °C aufgeheizt. Zur Überwachung des Reaktionsverlaufes wird das Volumen des Kondensats mitprotokolliert und von Zeit zu Zeit eine Probe zur Bestimmung der Hydroxylzahl entnommen. Nachdem die zuvor berechnete, einer vollständigen Umsetzung entsprechende Menge an Kondensat erreicht ist, wird der Xylolanteil destillativ entfernt. Das Reaktionsgemisch wird bei 200°C gerührt, bis eine Säurezahl von weniger als 5 mg KOH/g (bestimmt gemäß DIN 53402) erreicht ist. Das Gemisch wird auf 145°C abgekühlt und in 840 Gewichtsteilen Butylacetat gelöst.

Das resultierende Polyesterharz hat einen Festkörperanteil von 78,8 Gew.-%. Die resultierende Hydroxylzahl beträgt 190 mg KOH/g (bestimmt gemäß DIN 53240), die Säurezahl 5,8 mg KOH / g (DIN 53402).

### Herstellung des erfindungsgemäßen Polyesterpolyols A 2

In einem mit einem Rührer, Rückflußkühler und Wasserabscheider versehenen Reaktor werden 866,29 Gewichtsteile Isononansäure gegeben und mit 98,57 Gewichtsteilen Xylol versetzt. Die Mischung wird vorsichtig unter Rühren auf 80 C erhitzt. Dann werden 2133,71 Gewichtsteile eines dendritischen hydroxyfunktionellen Polyesters (Boltorn H 30, erhältlich von Perstorp) langsam hinzu gegeben, um Klumpenbildung zu vermeiden. Nach Zugabe wird das Reaktionsgemisch auf 200 C aufgeheizt. Zur Überwachung des Reaktionsverlaufes wird das Volumen des Kondensats mitprotokolliert und von Zeit zu Zeit eine Probe zur Bestimmung der Hydroxylzahl entnommen. Nachdem die zuvor berechnete, einer vollständigen Umsetzung entsprechende Menge an Kondensat erreicht ist, wird der Xylolanteil destillativ entfernt. Das Reaktionsgemisch wird bei 200 C gerührt, bis eine Säurezahl von weniger als 5 mg KOH/g (bestimmt gemäß DIN 53402) erreicht ist. Das Gemisch wird auf 145°C abgekühlt und in 725,36 Gewichtsteilen Butylacetat gelöst.

Das resultierende Polyesterharz hat einen Festkörperanteil von 79,8 Gew.-%. Die resultierende Hydroxylzahl beträgt 248,0 mg KOH/g (bestimmt gemäß DIN 53240), die Säurezahl 5,9 mg KOH / g (DIN 53402).

### Herstellung des erfindungsgemäßen Polyesterpolyols A 3

In einem mit einem Rührer, Rückflußkühler und Wasserabscheider versehenen Reaktor werden 727,27 Gewichtsteile Isononansäure gegeben und mit 82,75 Gewichtsteilen Xylol versetzt. Die Mischung wird vorsichtig unter Rühren auf 80 C erhitzt. Dann werden 2272,73 Gewichtsteile eines dendritischen hydroxyfunktionellen Polyesters (Boltorn H 30, erhältlich von Perstorp) langsam hinzu gegeben, um Klumpenbildung zu vermeiden. Nach Zugabe wird das Reaktionsgemisch auf 200 C aufgeheizt. Zur Überwachung des Reaktionsverlaufes wird das Volumen des Kondensats mitprotokolliert und von Zeit zu Zeit eine Probe zur Bestimmung der Hydroxylzahl entnommen. Nachdem die zuvor berechnete, einer vollständigen Umsetzung entsprechende Menge an Kondensat erreicht ist, wird der Xylolanteil destillativ entfernt. Das Reaktionsgemisch wird bei 200 C gerührt, bis eine Säurezahl von weniger als 5 mg KOH/g (bestimmt gemäß DIN 53402) erreicht ist. Das Gemisch wird auf 145°C abgekühlt und in 729,31 Gewichtsteilen Butylacetat gelöst.

Das resultierende Polyesterharz hat einen Festkörperanteil von 78,5 Gew.-%. Die resultierende Hydroxylzahl beträgt 281 mg KOH/g (bestimmt gemäß DIN 53240), die Säurezahl 6,1 mg KOH / g (DIN 53402).

### Herstellung des erfindungsgemäßen Polyesterpolyols A 4

In einem mit einem Rührer, Rückflußkühler und Wasserabscheider versehenen Reaktor werden 2700,0 Gewichtsteile Isononansäure gegeben und mit 134,62 Gewichtsteilen Xylol versetzt. Die Mischung wird vorsichtig unter Rühren auf 80 °C erhitzt. Dann werden 1516,85 Gewichtsteile eines dendritischen hydroxyfunktionellen Polyesters (Boltorn H 30, erhältlich von Perstorp) langsam hinzu gegeben, um Klumpenbildung zu vermeiden. Nach Zugabe wird das Reaktionsgemisch auf 200 C aufgeheizt. Zur Überwachung des Reaktionsverlaufes wird das Volumen des Kondensats mitprotokolliert und von Zeit zu Zeit eine Probe zur Bestimmung der Hydroxylzahl entnommen. Nachdem die zuvor berechnete, einer vollständigen Umsetzung entsprechende Menge an Kondensat erreicht ist, wird der Xylolanteil destillativ entfernt. Das Reaktionsgemisch wird bei 200 C gerührt, bis eine Säurezahl von weniger als 5 mg KOH/g (bestimmt gemäß DIN 53402) erreicht ist. Das Gemisch wird auf 145°C abgekühlt und in 641,35 Gewichtsteilen Pentylacetat gelöst.

Das resultierende Polyesterharz hat einen Festkörperanteil von 79,3 Gew.%. Die resultierende Hydroxylzahl beträgt 130,91 mg KOH/g (bestimmt gemäß DIN 53240), die Säurezahl 6,4 mg KOH / g (DIN 53402).

### Herstellung eines hydroxylgruppenhaltigen Acrylatharzes (PAC V1)

In einem Reaktor, der mit Stickstoff gespült wurde und auf dem ein Kühler angebracht ist, werden 759,61 Gewichtsteile Solventnaphtha vorgelegt und unter Rühren auf 145°C aufgeheizt.
Parallel dazu wurden zwei separate Zuläufe präpariert. Zulauf 1 bestand aus 457,60 Gewichtsteilen Ethylhexylmethacrylat, 213,54 Gewichtsteilen Styrol, 183,04 Gewichtsteilen n - Butylmethacrylat, 183,04 Gewichtsteilen 2 - Hydroxyethylacrylat, 457,60 Gewichtsteilen 4 - Hydroxybutylacrylat und 30,50 Gewichtsteilen Acrylsäure. Zulauf 2 bestand aus 62,54 Gewichtsteilen Solventnaphtha und 152,53 Gewichtsteilen Peroxid TBPEH (ter.-Butyl-peroxy-2-ethyl-hexanoat). Nachdem die Temperatur von 145°C erreicht war, wurde Zulauf 2 langsam und gleichmäßig über einen Zeitraum von 285 Minuten zudosiert. 15 Minuten nach dem Start von Zulauf 2 wurde Zulauf 1 langsam und gleichmäßig über einen Zeitraum von 240 Minuten in den Reaktor dosiert. Nach Ende der Dosierung von Zulauf 2 wurde das Reaktionsgemisch zur Nachpolymerisation noch 120 Minuten bei 145°C gerührt.
Der Festkörpergehalt des so erhaltenen Produktes wurde zu 65,65 %, die Säurezahl zu 15,5 mg KOH / g (bezogen auf den Festkörper) und die Viskosität (bei 23°C) zu 21 d Pa s bestimmt. Die OH - Zahl wurde zu 174,7 mg KOH / g bestimmt.

### Herstellung eines Rheologiehilfsmittels F1 auf der Basis von Harnstoffen

Ein 5 l Juvo-Reaktionsgefäß mit Heizmantel, Thermometer, Rührer und mit aufgesetztem Kühler wurde mit 875,7 g eines aromatischen Lösemittels beschickt. Unter Rühren und Schutzgasatmosphäre (200 cm3/min Stickstoff) wurde das aromatische Lösemittel unter Überdruck (max. 3,5 bar) auf 160°C erhitzt. Mit Hilfe einer Messpumpe wurde eine Mischung aus 37,5 g Di-tert.-butylperoxid und 138,6 g eines aromatischen Lösemittels gleichmäßig und tropfenweise innerhalb von 4,75 h hinzugegeben. 0,25 h nach Beginn der Zugabe wurden mit Hilfe einer Messpumpe 848,4 g Styrol, 600,0 g n-Butylacrylat, 418,2 g Hydroxyethylacrylat und 38,4 g Methacrylsäure innerhalb von 4 h gleichmäßig hinzugegeben. Nach Beendigung der Zugabe wurde die Temperatur noch für 2 h gehalten und dann das Produkt auf 60°C abgekühlt und durch einen 5 µm GAF-Bag gefiltert. Das resultierende Harz hatte eine Säurezahl von 15 mg KOH/g (nach DIN 53402), einen Feststoffgehalt von 65% +/- 1 (60 min, 130°C) und eine Viskosität von 8,5 dPa * s gemäß der Versuchsvorschrift nach DIN ISO 2884-1 (55% in Solventnaphtha).

Ein 1 l-Reaktor wurde mit 423,5 g der Harzlösung befüllt und mit 29,4 g Butylacetat verdünnt. Danach wurden 11,2 g Benzylamin hinzugefügt und die Mischung für 30 min gerührt. Nach dieser Zeit wurde unter Aufwand hoher Scherkräfte eine Mischung von 8,8 g Hexamethylendiisocyanat und 17,1 g Butylacetat so hinzugefügt, dass eine Reaktionstemperatur von 40°C nicht überschritten wurde. Die so erhaltene Mischung hatte eine Viskosität von > 800mPas (10 s-1) (Z3) (DIN ISO 2884-1) und einen Feststoffgehalt von 59,0% (60 min, 130°C).

### Herstellung eines weiteren Rheologie-Additivs F2

In einem 5l Reaktor, der mit Stickstoff gespült wurde und auf dem ein Kühler angebracht ist, werden 924,00 Gewichtsteile Solventnaphtha vorgelegt und unter Rühren auf 140°C aufgeheizt.
Parallel dazu wurden zwei separate Zuläufe präpariert. Zulauf 1 bestand aus 338,10 Gewichtsteilen Styrol, 253,50 Gewichtsteilen n-Butylmethacrylat, 338,10 Gewichtsteilen 2Hydroxypropylmethacrylat, 16,80 Gewichtsteilen Acrylsäure, 439,50 Gewichtsteilen Cyclohexyl-methacrylat und 304,20 Gewichtsteilen 2-Hydroxyethylmethacrylat. Zulauf 2 bestand aus 60,00 Gewichtsteilen Solventnaphtha und 168,90 Gewichtsteilen Peroxid TBPEH (ter.-Butyl-peroxy-2-ethyl-hexanoat). Nachdem die Temperatur von 140°C erreicht war, wurde Zulauf 2 langsam und gleichmäßig über einen Zeitraum von 285 Minuten zudosiert. 15 Minuten nach dem Start von Zulauf 2 wurde Zulauf 1 langsam und gleichmäßig über einen Zeitraum von 240 Minuten in den Reaktor dosiert. Nach Ende der Dosierung von Zulauf 2 wurde das Reaktionsgemisch zur Nachpolymerisation noch 120 Minuten bei 140°C gerührt. Der Festkörper wurde mit 179,40g Solventnaphtha eingestellt.

Der Festkörpergehalt des so erhaltenen Produktes wurde zu 60,00 %, die Säurezahl zu 9,00 mg KOH / g (bezogen auf den Festkörper) und die Viskosität (bei 23°C, 55%-ig in Solventnaphtha) zu 2000 m Pa s ((2500 s⁻¹) (CAP03) (DIN ISO 2884-1) bestimmt. Die OH - Zahl wurde zu 155,6 mg KOH / g bestimmt.

75 Gew.-Teile des so erhaltenen Polyacrylatpolyols wurden in 16,3 Gewichtsteilen Butylacetat angelöst. Zu diesem Gemisch wurden 8,7 Gewichtsteile Aerosil ® 380 (handelsübliche hydrophile Kieselsäure mit einer mittleren Primärteilchengröße von 7 nm und einer spezifischen BET-Oberfläche von 380 m²/g der Firma Evonik) zugegeben. Anschließend erfolgte die Homogenisierung des so erhaltenen Gemisches in einem Dissolver (VDH-1 der Firma Vollrath, Umfanggeschwindigkeit 8 - 28 m/s) bei einer Temperatur von 60°C. Abschließend wurde das Gemisch in einer Rührwerksmühle (Typ ZWM 46, Mahlkörper 0,6 - 0,8 mm, Typ ER 120 A, Füllgrad 85) bei einem Energieeintrag von 0,18kWh pro kg Mahlgut und einer Maximal-temperatur der Paste von 60°C vermahlen. Die so erhaltene Paste wurde als Rheologiehilfsmittel eingesetzt.

### Herstellung eines phosphorhaltigen, aminblockierten Katalysators (D)

In einem 500 ml Glaskolben werden 42,5 g Hexanol und 167,3 g Diaza-bicyclootan (DABCO) vorgelegt die Mischung wird unter Stickstoffatmosphäre und Rückflusskühlung gerührt, auf 44°C aufgeheizt und gehalten, bis sich das DABCO gelöst hat. Anschließend werden 45,78 g Di(2-ethyl-hexyl)phosphorsäure (Handelsprodukt Baysolvex D2EHPA von der Firma Lanxess) langsam zugetropft so dass 50°C nicht überschritten werden. Nach Zulaufende wird das Produkt 3h bei 40°C gehalten. Anschließend wird das Produkt mit 93,75 g Butylacetat und 51,2 g Hexanol angelöst.

### Herstellung des erfindungsgemäßen teilsilanisierten Polyisocyanates B1 (Umsetzungsgrad der Isocyanatgruppen = 40 mol-%)

In einem Rundkolben mit Rückflusskühler wurden zu 36,296 Gewichtsteilen trimerisiertes Hexamethylendiisocyanat (Handelsprodukt Basonat HI 100 der BASF SE, Ludwigshafen), 36,093 Gewichtsteile Butylacetat und 2,458 Gewichtsteile Triethylorthoformiat vorgelegt. 1,786 Gewichtsteile N-(3-Trimethoxysilylpropan-1-yl)-N-n-butylamin (Handelsprodukt Dynasilan 1189 der Fa. Evonik) und 23,367 Gewichtsteile N,N-Bis(3-Trimethoxysilyl-propan-1-yl)-amin (Handelsprodukt Dynasilan 1124 der Fa. Evonik) wurden vorgemischt und langsam bei Raumtemperatur unter Rückfluss und Stickstoffüberschleierung so dosiert zugegeben, dass die Produkttemperatur 60°C nicht überschreitet. Anschließend wurde das Reaktionsgemisch auf 60°C temperiert und gehalten, bis der Rest-NCO-Gehalt 4,9% erreicht hatte (NCO-Bestimmung durch Titration).

### Formulierung der Beschichtungsmittel und Herstellung der Beschichtungen

Die Beschichtungsmittel der Beispiele 1 bis 5 und der Vergleichsbeispiele 1 und 2 wurden folgendermaßen formuliert:
Die Komponente 1, enthaltend Komponente A (Polyol) und handelsübliche Additive und Katalysator und Lösungsmittel, wird kurz vor der Applikation mit Komponente 2, enthaltend Komponente B1 (modifiziertes Polyisocyanat), vereinigt und solange verrührt bis eine homogene Mischung entsteht.

In Tabelle 1 sind die Beschichtungsmittel des Beispiels 1 und des Vergleichsbeispiels 1 hinsichtlich der Anteile der Komponenten angeführt:

**Tabelle 1: Zusammensetzung der Klarlacke des Beispiels 1 und des Vergleichsbeispiels 1 in Gewichtsteilen**

| | Beispiel 1 | Vergleichs-beispiel 1 |
|---|---|---|
| Acrylat (PAC V1) | | 36,60 |
| Polyester A1 | 36,60 | |
| | | |
| Rheologiehilfsm. F1 | 21,00 | 21,00 |
| Additiv F2 | 12,30 | 12,30 |
| Butylacetat | 14,70 | 14,70 |
| Butyldiglykolacetat | 2,10 | 2,10 |
| | | |
| Triethylorthoformiat | 3,15 | 3,15 |
| Verlaufsm. F3 ¹⁾ | 0,20 | 0,20 |
| Tinuvin 384-2 ²⁾ | 1,60 | 1,60 |
| Tinuvin 152, 50%ig in SN ³⁾ | 2,75 | 2,75 |
| Katalys. D1 | 5,60 | 5,60 |
| gesamt | 100,00 | 100,00 |
| Isocyanathärter B1 | 113,5 | 96,6 |

| | | |
|---|---|---|
| Erläuterungen zu Tabelle 1: ¹⁾ handelsübliches Verlaufsmittel auf Polyester-Basis ²⁾ handelsübliches Lichtschutzmittel auf Basis eines Benztriazols der Firma Ciba ³⁾ handelsübliches Lichtschutzmittel auf Basis eines sterisch gehinderten Amins der Firma Ciba | | |

In Tabelle 2 sind die Beschichtungsmittel der Beispiele 2 bis 5 und des Vergleichsbeispiels 2 hinsichtlich der Anteile der Komponenten angeführt. Die jeweiligen Stammlacke wurden durch die Zugabe von Solvent Naphta auf 33 Sekunden Auslaufzeit im DIN - 4 - Becher eingestellt.

**Tabelle 2: Zusammensetzung der Klarlacke der Beispiele 2 bis 5 und des Vergleichsbeispiels 2 in Gewichtsteilen**

| | Vergleichs-beispiel 2 | Beispiel 2 | Beispiel 3 | Beispiel 4 | Beispiel 5 |
|---|---|---|---|---|---|
| Acrylat (PAC V1) | 48,50 | | | | |
| Polyester A1 | | 47,06 | | | |
| Polyester A2 | | | 45,48 | | |
| Polyester A3 | | | | 41,13 | |
| Polyester A4 | | | | | 48,65 |
| Rheologiehilfsm. F1 | 18,35 | 17,85 | 17,25 | 15,60 | 18,11 |
| Solventnaphta | 19,00 | 21,37 | 24,00 | 31,20 | 19,07 |
| Triethylorthoformiat | 3,70 | 3,57 | 3,45 | 3,21 | 3,69 |
| Verlaufsm. F4 ¹⁾ | 0,50 | 0,38 | 0,37 | 0,33 | 0,39 |
| Tinuvin 384 ²⁾ | 1,90 | 1,81 | 1,75 | 1,58 | 1,87 |
| Tinuvin 292 ³⁾ | 1,60 | 1,55 | 1,50 | 1,35 | 1,60 |
| Nacure 4167 ⁴⁾ | 6,35 | 6,31 | 6,10 | 5,50 | 6,52 |
| DBN-Lsg. (30%ig in Butanol) ⁵⁾ | 0,10 | 0,10 | 0,10 | 0,10 | 0,10 |
| gesamt | 100,00 | 100,00 | 100,00 | 100,00 | 100,00 |
| Isocyanathärter B1 | 103,7 | 138,7 | 162,0 | 168,0 | 95,1 |

| | | | | | |
|---|---|---|---|---|---|
| Erläuterungen zu Tabelle 2: ¹⁾ handelsübliches Verlaufsmittel auf Basis eines polyethermodifizierten Polydimethylsiloxans ²⁾ handelsübliches Lichtschutzmittel auf Basis eines Benztriazols der Firma Ciba ³⁾ handelsübliches Lichtschutzmittel auf Basis eines sterisch gehinderten Amins der Firma Ciba ⁴⁾ handelsüblicher Katalysator der Firma King Industries auf Basis eines aminblockierten Phosphorsäureteilesters ⁵⁾ DBN = 1,5-Diazabicyclo[4.3.0]non-5-en | | | | | |

### Herstellung und Prüfung der Beschichtungen

Die Beurteilung des optischen Gesamteindrucks (Appearance) erfolgte nach pneumatischer Applikation der Beschichtungsmittel bei 2,5 bar in drei Spritzgängen entweder auf einem handelsüblichen Wasserbasislack schwarz uni der Firma BASF Coatings AG oder auf einem handelsüblichen Wasserbasislack silber metallic der Firma BASF Coatings AG. Danach wird die jeweils resultierende Beschichtung 5 Minuten bei Raumtemperatur abgelüftet und anschließend bei 140°C 22 Minuten eingebrannt.
Die eingebrannten Lackfilme des Beispiels 1 und des Vergleichsbeispiels 1 wurden mittels des Gerätes "Wave Scan" der Firma Byk - Gardner untersucht, wobei auf einer Strecke von 10 cm 1250 Messpunkte aufgenommen wurden. Die Reflektion wird vom Messgerät in Langwelligkeit ("Long Wave" = LW-Wert), d. h. die Varianz der Lichtintensität für Strukturen im Bereich von 0,6 mm bis 10 mm sowie in Kurzwelligkeit ("Short Wave" = SW-Wert), d. h. die Varianz der Lichtintensität für Strukturen im Bereich von 0,1 mm bis 0,6 mm, unterteilt. Die Ergebnisse der Wave-Scan-Messungen sind in Tabelle 3 und Tabelle 4 dargestellt. Zusätzlich zur Appearancebewertung wurde auf dem Basislack uni schwarz eine Läuferprüfung durchgeführt. Dabei zeigte sich, dass beide Klarlacke eine Läufergrenze von > 50 µm aufweisen.

**Tabelle 3: Ergebnisse der Wave-Scan-Messungen der gehärteten Beschichtungen auf dem Wasserbasislack Schwarz uni:**

| Material | Klarlackschichtdicke [µm] | LW | SW |
|---|---|---|---|
| Beispiel 1 | 20-25µm | 24 | 28 |
| | 25-30µm | 18 | 25 |
| | 30-35µm | 17 | 26 |
| | 35-40µm | 15 | 27 |
| | 40-45µm | 12 | 28 |
| Vergleichs-beispiel V1 | 20-25µm | 30 | 35 |
| | 25-30µm | 25 | 32 |
| | 30-35µm | 21 | 34 |
| | 35-40µm | 16 | 38 |
| | 40-45µm | 15 | 41 |

**Tabelle 4: Ergebnisse der Wave-Scan-Messungen der gehärteten Beschichtungen auf dem Wasserbasislack Silber metallic:**

| Material | Klarlackschichtdicke [µm] | LW | SW |
|---|---|---|---|
| Beispiel 1 | 20-25µm | 18 | 23 |
| | 25-30µm | 16 | 22 |
| | 30-35µm | 14 | 24 |
| | 35-40µm | 12 | 25 |
| | 40-45µm | 11 | 27 |
| Vergleichsbeispiel V1 | 20-25µm | 21 | 29 |
| | 25-30µm | 19 | 29 |
| | 30-35µm | 17 | 33 |
| | 35-40µm | 14 | 35 |
| | 40-45µm | 13 | 37 |

Die Ergebnisse zeigen, dass sowohl bei Applikation auf dem schwarzen Basislack als auch bei Applikation auf dem Metallic Silber Basislack die unter Verwendung des erfindungsgemäßen Beschichtungsmittels hergestellte Beschichtung des Beispiels 1 stets niedrigere Long Wave und niedrigere Short Wave Werte aufweist als die Beschichtung des Vergleichsbeispiels V1 unter Verwendung des nicht erfindungsgemäßen Beschichtungsmittels auf Basis eines Acrylatpolyols. Vor allem die für einen guten visuellen Eindruck entscheidenden Long Wave Messwerte LW bei möglichst niedrigen Schichtdicken sind im erfindungsgemäßen Beispiel 1 deutlich niedriger als die entsprechenden Long Wave Messwerte LW der resultierenden Beschichtung des Vergleichsbeispiels V1.

Von den resultierenden Beschichtungen auf dem Wasserbasislack Schwarz uni erfolgte außerdem die Prüfung der Kratzfestigkeit der Oberflächen mit Hilfe des Crockmeter-Tests [in Anlehnung an EN ISO 105-X12 mit 10 Doppelhüben und 9N Auflagekraft unter Verwendung von 9um Schleifpapier (3M 281 Q wetordryTMproductionTM), unter anschließender Bestimmung des Restglanzes bei 20° mit einem handelsüblichen Glanzgerät] und des Hammertests [10 bzw. 100 Doppelhübe mit Stahlwolle (RAKSO®00(Fein)) und einem Auflagegewicht von 1 kg, die mit einem Hammer durchgeführt werden und anschließender Bestimmung des Restglanzes bei 20° mit einem handelsüblichen Glanzgerät]. Die Ergebnisse sind in der nachfolgenden Tabelle 5 dargestellt:

**Tabelle 5: Ergebnisse der Prüfung der Trockenkratzfestigkeit mit Hilfe des Crockmeter und des Hammertestes**

| Test | Restglanz [%] Beispiel 1 | Restglanz [%] Vergleichsbeispiel V1 |
|---|---|---|
| Crockmeter 9 µm Papier, 10 Doppelhübe | 91 | 93 |
| Hammertest 10 Doppelhübe | 96 | 91 |
| Hammertest 100 Doppelhübe | 94 | 88 |

Aus den Ergebnissen geht hervor, dass die Beschichtung des Beispiels 1 und die des Vergleichsbeispiels V1 eine sehr gute, vergleichbare Kratzbeständigkeit in beiden Tests zeigen. Es gelingt also erfindungsgemäß eine Verbesserung des Appearance ohne eine Verschlechterung der mechanischen Eigenschaften.

Die Beschichtungsmittel der Beispiele 2 bis 5 und des Vergleichsbeispiels 2 wurden pneumatisch bei 2,5 bar in drei Spritzgängen auf einem handelsüblichen Wasserbasislack schwarz uni der Firma BASF Coatings AG appliziert. Danach wird die jeweils resultierende Beschichtung 5 Minuten bei Raumtemperatur abgelüftet und anschließend bei 140°C 22 Minuten eingebrannt. Von den resultierenden Beschichtungen wurde visuell das Appearance beurteilt. Von den resultierenden Beschichtungen erfolgte außerdem die Prüfung der Mikroeindringhärte entsprechend der DIN 55676 mit Hilfe des Fisherscope Messgerätes der Firma Helmut Fischer GmbH & Co mit einer maximalen Kraft von 30 mN und die Prüfung der Kratzfestigkeit der Oberflächen mit Hilfe des Hammertests [10 bzw. 100 Doppelhübe mit Stahlwolle (RAKSO®00(Fein)) und einem Auflagegewicht von 1 kg, die mit einem Hammer durchgeführt werden und anschließender Bestimmung des Restglanzes bei 20° mit einem handelsüblichen Glanzgerät]. Die Ergebnisse sind in der nachfolgenden Tabelle 6 dargestellt:

**Tabelle 6: Ergebnisse der Prüfung des Appearance, der Mikroeindringhärte und der Trockenkratzfestigkeit mit Hilfe des Hammertestes**

| | Appearance - visuelle Beurteilung | Mikroeindringhärte 30 mN [N/mm2] | Hammertest Restglanz nach 10 DH [%] | Hammertest Restglanz nach 100 DH [%] |
|---|---|---|---|---|
| Vergleichsbeispiel 2 | Stark ausgeprägte kurze Welle | 107,5 | 92,7 | 87,5 |
| Beispiel 2 | i.O. | 110,2 | 96,8 | 95,5 |
| Beispiel 3 | i.O. | 114,4 | 98,7 | 96,6 |
| Beispiel 4 | i.O. | 117,3 | 98,7 | 98,0 |
| Beispiel 6 | Sichtbare kurze Welle, jedoch weniger stark ausgeprägt als in Vergleichsbeispiel 2 | 84,96 | 92,5 | 85,1 |

Die Ergebnisse zeigen, dass die Verwendung von Polyestern mit einer nie drigeren OH - Zahl zu Beschichtungen mit einer schlechteren Appearance und einer schlechteren Kratzfestigkeit führt als die Verwendung von Polyestern mit sehr hohen OH-Zahlen. Besonders bevorzugt werden daher Polyester mit einer OH-Zahl von mindestens 180 mgKOH/g eingesetzt.

## Patentansprüche

1. Beschichtungsmittel auf Basis aprotischer Lösemittel, enthaltend
(a) mindestens eine hydroxylgruppenhaltige Verbindung (A),
(b) mindestens eine gesättigte Verbindung (B) mit freien und/oder blockierten Isocyanatgruppen, die zumindest teilweise hydrolysierbare Silangruppen enthätt, und
(c) mindestens einen Katalysator (D) für die Vernetzung von Silangruppen,
**dadurch gekennzeichnet, dass** das Beschichtungsmittel als hydroxylgruppenhaltige Verbindung (A) mindestens einen hyperverzweigten, dendritischen hydroxyfunktionellen Polyester enthält, bei dem im Mittel mindestens eine Hydroxylfunktion des Polyesters mit mindestens einer Säure ausgewählt aus der Gruppe der isomeren C8- bis C9-Monocarbonsäuren verestert ist.

2. Beschichtungsmittel nach Anspruch 1, **dadurch gekennzeichnet, dass** die Monocarbonsäure gesättigt ist oder dass die Monocarbonsäure Octansäure oder Isononansäure ist.

3. Beschichtungsmittel nach Anspruch 1 oder 2, **dadurch gekennzeichnet, dass** das Beschichtungsmittel als hydroxylgruppenhaltige Verbindung (A) mindestens einen hyperverzweigten, dendritischen hydroxyfunktionellen Polyester mit einer OH-Zahl ≥ 180 mg KOH/g gemessen über DIN 53240, enthält.

4. Beschichtungsmittel nach einem der Ansprüche 1 bis 3, **dadurch gekennzeichnet, dass** der Polyester eine Hydroxylzahl von > 180 mg KOH/g, bestimmt gemäß DIN 53240 und/oder eine Hydroxyfunktionalität (gegeben über die Anzahl der freien und der veresterten Hydroxylgruppen des hydroxyfunktionellen Polyesters) von größer als 16 aufweist.

5. Beschichtungsmittel nach einem der Ansprüche 1 bis 4, **dadurch gekennzeichnet, dass** der Polyester eine Säurezahl ≤ 8,0, bestimmt gemäß DIN 53402 aufweist und/oder dass der Polyester ein zahlenmittleres Molekulargewicht von 1500 - 4000 g/mol, bestimmt über GPC mit einem Polystyrolstandard in THF mit 0,1 Gew.-% Essigsäure hat.

6. Beschichtungsmittel nach einem der Ansprüche 1 bis 5, **dadurch gekennzeichnet, dass** der Polyester eine Polydispersität Mw/Mn < 4 aufweist.

7. Beschichtungsmittel nach einem der Ansprüche 1 bis 6, **dadurch gekennzeichnet, dass** es als Lösemittel Butylacetat oder ein Butylacetat enthaltendes Lösemittelgemisch enthält.

8. Beschichtungsmittel nach einem der Ansprüche 1 bis 7, **dadurch gekennzeichnet, dass** der Polyester herstellbar ist über eine partielle Veresterung eines hydroxyfunktionellen Polyesters, der wiederum herstellbar ist über ein Verfahren zur Synthese eines dendritischen polymeren polyfunktionellen Polyalkohols mit reaktiven und gegebenenfalls geschützten Hydroxylendgruppen,
- wobei der polymere Polyalkohol n dendritische Zweige besitzt, die von einem monomeren oder polymeren Initiatormolekül mit n reaktiven Gruppen (A1) entspringen, wobei jeder Zweig g Verzweigungsgenerationen umfasst, wobei jede Generation mindestens einen polymeren oder monomeren Verzweigungskettenverlängerer mit drei funktionellen Gruppen, von denen mindestens zwei reaktive Hydroxylgruppen (A2) sind und eine eine Carboxylgruppe (A3) ist, die mit der reaktiven Gruppe (A1) und/ oder den Hydroxylgruppen (A2) reaktiv ist, umfasst, und gegebenenfalls mindestens eine Abstandhaltergeneration, die mindestens einen Abstandhalterkettenverlängerer mit zwei funktionellen Gruppen, von denen eine eine geschützte Hydroxylgruppe (A2") und eine eine Gruppe (A4) ist, die mit einer Hydroxylgruppe reaktiv ist, umfasst, wobei n und g ganze Zahlen und mindestens 1 sind,
- wobei (i) die zwei Hydroxylgruppen (A2) des verwendeten monomeren oder polymeren Kettenverzweigungsverlängerers acetalgeschützte Hydroxylgruppen (A2') sind, wobei der Schutz durch Acetal erhalten wird durch eine Reaktion zwischen den zwei Hydroxylgruppen (A2) und einer acetalbildenden Carbonyl verbindung; und
- (ii) eine erste Verzweigungsgeneration zum Initiatormolekül hinzugefügt wird durch Reaktion zwischen der reaktiven Gruppe (A1) und der Carboxylgruppe (A3) in einem molaren Verhältnis der reaktiven Gruppen (A1) zu den Carboxylgruppen (A3) von mindestens 1, wodurch ein polymerer Polyalkohol mit acetalgeschützten Hydroxylgruppen (A2') und n dendritischen Zweigen, die eine Generation umfassen, erhalten wird, wobei die acetalgeschützten Hydroxylgruppen (A2') gegebenenfalls mittels Acetalspaltung entschützt werden, wodurch ein polymerer Polyalkohol mit reaktiven Hydroxylgruppen (A2) erhalten wird; und wobei
- (iii) weitere Verzweigungsgenerationen hinzugefügt werden in g - 1 wiederholten Schritten durch Reaktion zwischen reaktiven Hydroxylgruppen (A2), die durch Entschützung mittels Acetalspaltung erhalten werden, und Carboxylgruppen (A3) in einem molaren Verhältnis von Hydroxylgruppen (A2) zu Carboxylgruppen (A3) von mindestens 1, wodurch ein polymer Polyalkohol mit acetalgeschützten Hydroxylgruppen (A2') und n dendritischen Zweigen, die zwei oder mehr Generationen umfassen, erhalten wird, wobei die acetalgeschützten Hydroxylgruppen (A2') gegebenenfalls mittels Acetalspaltung entschützt werden, wodurch ein polymerer Polyalkohol mit reaktiven Hydroxylgruppen (A2) erhalten wird, und
- gegebenenfalls (iv) auf Schritt (ii) und/oder jede Wiederholung von Schritt (iii) einzeln
- (a) eine teilweise Schützung, wie beispielsweise Schützung als Acetal, Ketal und/oder Ester von verfügbaren reaktiven Hydroxylgruppen (A2), wodurch ein polymerer Polyalkohol mit mindestens einer reaktiven Hydroxylgruppe (A2) für die Verwendung in Schritt (iii) oder in einem wiederholten Schritt (ii) erhalten wird, und/oder
- (b) der Zusatz des optionalen Abstandshalterkettenverlängerers, was nach Entschützung der geschützten Hydroxylgruppe (A2") einen polymeren Polyalkohol mit reaktiven Hydroxylgruppen (A2) für die Verwendung in Schritt (iii) oder einem wiederholten Schritt (iii) und n dendritische Zweige ergibt, die eine oder mehrere Verzweigungsgenerationen umfassen, und mindestens eine Abstandshaltergeneration zumindest eine Teilgeneration ist;
folgt.

9. Beschichtungsmittel nach einem der Ansprüche 1 bis 8, **dadurch gekennzeichnet, dass** der Katalysator phosphorhaltig ist und/oder dass der Katalysator (D) oder die Katalysatoren (D) ausgewählt ist bzw. sind aus der Gruppe der substituierten Phosphonsäurediester und/oder Diphosphonsäurediester, der substituierten Phosphorsäuremonoester und/oder Phosphorsäurediester, vorzugsweise aus der Gruppe, bestehend aus acyclischen Phosphorsäurediestern und/oder cyclischen Phosphorsäurediestem, und/oder der entsprechenden aminblockierten Phosphorsäureester.

10. Beschichtungsmittel nach einem der Ansprüche 1 bis 9, **dadurch gekennzeichnet, dass** die Verbindung (B)
zwischen 2,5 und 97,5 mol-%, bezogen auf die Gesamtheit der Struktureinheiten (I) und (I), mindestens einer Struktureinheit der Formel (I)
-N(X-SiR"x(OR')3-x)n(X'-SiR"y(OR')3-y)m (I)
wobei
R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
X,X' = linearer und/oder verzweigter Alkylen oder Cycloalkylenrest mit 1 bis 20 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
n = 0 bis 2, m = 0 bis 2, m+n = 2 , sowie
x,y = 0 bis 2,
und
zwischen 2,5 und 97,5 mol-%, bezogen auf die Gesamtheit der Struktureinheiten (I) und (II), mindestens einer Struktureinheit der Formel **(II)**
-Z-(X-SiR"x(OR')3-x) (II),
wobei
Z = -NH-, -NR-,-O-, mit
R = Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl ,
x = 0 bis 2, und
X, R', R" die bei Formel **(II)**angegebene Bedeutung haben,
aufweist.

11. Beschichtungsmittel nach Anspruch 10, **dadurch gekennzeichnet, dass** die Verbindung (B) zwischen 5 und 95 mol-%, bezogen auf die Gesamtheit der Struktureinheiten (I) und (II), mindestens einer Struktureinheit der Formel (I) und zwischen 5 und 95 mol-%, jeweils bezogen auf die Gesamtheit der Struktureinheiten (I) und (II), mindestens einer Struktureinheit der Formel (II), aufweist.

12. Beschichtungsmittel nach Anspruch 10 oder 11, **dadurch gekennzeichnet, dass** die Strukturelemente (I) und (II) in Anteilen von 2,5 bis 97,5 mol-%,
bezogen auf die Summe der für die Vernetzung im Beschichtungsmittel maßgeblichen funktionellen Gruppen, gebildet aus den Anteilen der Hydroxyl- und Isocyanatgruppen sowie den Anteilen der Strukturelemente (I) und (II), vorhanden sind.

13. Beschichtungsmittel nach einem der Ansprüche 10 bis 12, **dadurch gekennzeichnet, dass** im Polyisocyanat (B)
zwischen 2,5 und 90 mol-%, der Isocyanatgruppen im Polyisocyanatgrundkörper zu Struktureinheiten (I) und
zwischen 2,5 und 90 mol-%, der Isocyanatgruppen im Polyisocyanatgrundkörper zu Struktureinheiten **(II)**
umgesetzt sind und/oder der Gesamtanteil der zu den Struktureinheiten (I) und/oder (II) umgesetzten Isocyanatgruppen im Polyisocyanatgrundkörper zwischen 5 und 95 mol-% liegt und/oder dass der Polyisocyanatgrundkörper ausgewählt ist aus der Gruppe 1,6-Hexamethylendiisocyanat, Isophorondiisocyanat, und 4,4'-Methylendicyclohexyldiisocyanat, der Biuret-Dimeren der vorgenannten Polyisocyanate und/oder der Isocyanurat-Trimeren der vorgenannten Polyisocyanate..

14. Mehrstufiges Beschichtungsverfahren, **dadurch gekennzeichnet, dass** auf ein gegebenenfalls vorbeschichtetes Substrat eine pigmentierte Basislackschicht und danach eine Schicht aus dem Beschichtungsmittel nach einem der Ansprüche 1 bis 13 aufgetragen wird.

15. Mehrstufiges Beschichtungsverfahren nach Anspruch 14, **dadurch gekennzeichnet, dass** nach dem Auftrag der pigmentierten Basislackschicht der aufgebrachte Basislack zunächst bei Temperaturen von Raumtemperatur bis 80°C getrocknet wird und nach dem Auftrag des Beschichtungsmittels nach einem der Ansprüche 1 bis 14 bei Temperaturen von 30 bis 200°C während einer Zeit von 1 min bis zu 10 h gehärtet wird.

16. Verwendung der Beschichtungsmittel nach einem der Ansprüche 1 bis 13 als Klarlack bzw. Anwendung des Verfahrens nach Anspruch 14 oder 15 für die Automobilserienlackierung und die Automobilreparaturlackierung.

17. Effekt- und/oder farbgebende Mehrschichtlackierung aus mindestens einer pigmentierten Basislackschicht und mindestens einer darauf angeordneten Klarlackschicht, **dadurch gekennzeichnet, dass** die Klarlackschicht aus einem Beschichtungsmittel nach einem der Ansprüche 1 bis 13 hergestellt worden ist.

## Claims

1. Coating composition based on aprotic solvents, comprising
(a) at least one hydroxyl-containing compound (A),
(b) at least one saturated compound (B) having free and/or blocked isocyanate groups and containing at least in part hydrolyzable silane groups, and
(c) at least one catalyst (D) for the crosslinking of silane groups,
**characterized in that** the coating composition comprises as hydroxyl-containing compound (A) at least one hyperbranched, dendritic hydroxy-functional polyester in which on average at least one hydroxyl function of the polyester is esterified with at least one acid selected from the group of the isomeric C8 to C9 monocarboxylic acids.

2. Coating composition according to Claim 1, **characterized in that** the monocarboxylic acid is saturated or **in that** the monocarboxylic acid is octanoic acid or isononanoic acid.

3. Coating composition according to Claim 1 or 2, **characterized in that** the coating composition comprises as hydroxyl-containing compound (A) at least one hyperbranched, dendritic hydroxy-functional polyester having an OH number ≥ 180 mg KOH/g measured via DIN 53240.

4. Coating composition according to any of Claims 1 to 3, **characterized in that** the polyester has a hydroxyl number of > 180 mg KOH/g, determined in accordance with DIN 53240, and/or a hydroxy functionality (given via the number of free and of esterified hydroxyl groups of the hydroxy-functional polyester) of greater than 16.

5. Coating composition according to any of Claims 1 to 4, **characterized in that** the polyester has an acid number ≤ 8.0, determined in accordance with DIN 53402, and/or **in that** the polyester has a number-average molecular weight of 1500-4000 g/mol, determined via GPC with a polystyrene standard in THF with 0.1% by weight of acetic acid.

6. Coating composition according to any of Claims 1 to 5, **characterized in that** the polyester has a polydispersity Mw/Mn < 4.

7. Coating composition according to any of Claims 1 to 6, **characterized in that** it comprises as solvent butyl acetate or a solvent mixture comprising butyl acetate.

8. Coating composition according to any of Claims 1 to 7, **characterized in that** the polyester is preparable via a partial esterification of a hydroxy-functional polyester which is preparable in turn via a method for the synthesis of a dendritic polymeric polyfunctional polyalcohol having reactive and, if desired, protected hydroxyl end groups,
- where the polymeric polyalcohol possesses n dendritic branches originating from a monomeric or polymeric initiator molecule having n reactive groups (A1), each branch comprising g branching generations, each generation comprising at least one polymeric or monomeric branching chain extender having three functional groups, of which at least two are reactive hydroxyl groups (A2) and one is a carboxyl group (A3) which is reactive with the reactive group (A1) and/or with the hydroxyl groups (A2), and, if desired, at least one spacer generation which comprises at least one spacer chain extender having two functional groups, of which one is a protected hydroxyl group (A2") and one is a group (A4) which is reactive with a hydroxyl group, with n and g being whole numbers and being at least 1,
- where (i) the two hydroxyl groups (A2) of the monomeric or polymeric chain branching extender used are acetal-protected hydroxyl groups (A2'), the protection by acetal being obtained through a reaction between the two hydroxyl groups (A2) and an acetal-forming carbonyl compound; and
- (ii) where a first branching generation is added to the initiator molecule through reaction between the reactive group (A1) and the carboxyl group (A3), in a molar ratio of the reactive groups (A1) to the carboxyl groups (A3) of at least 1, to give a polymeric polyalcohol having acetal-protected hydroxyl groups (A2') and n dendritic branches which comprise one generation, the acetal-protected hydroxyl groups (A2') being deprotected, if desired, by means of acetal cleavage, to give a polymeric polyalcohol having reactive hydroxyl groups (A2); and
- (iii) where further branching generations are added in g - 1 repeated steps, through reaction between reactive hydroxyl groups (A2), obtained by deprotection by means of acetal cleavage, and carboxyl groups (A3), in a molar ratio of hydroxyl groups (A2) to carboxyl groups (A3) of at least 1, to give a polymeric polyalcohol having acetal-protected hydroxyl groups (A2') and n dendritic branches which comprise two or more generations, the acetal-protected hydroxyl groups (A2') being deprotected, if desired, by means of acetal cleavage, to give a polymeric polyalcohol having reactive hydroxyl groups (A2), and
- if desired, (iv) step (ii) and/or each repetition of step (iii) individually is followed by
- (a) a partial protection, such as protection as an acetal, ketal and/or ester, for example, of available reactive hydroxyl groups (A2), giving a polymeric polyalcohol having at least one reactive hydroxyl group (A2) for use in step (iii) or in a repeated step (ii), and/or
- (b) the addition of the optional spacer chain extender, which addition, following deprotection of the protected hydroxyl group (A2"), produces a polymeric polyalcohol having reactive hydroxyl groups (A2) for use in step (iii) or in a repeated step (iii) and n dendritic branches which comprise one or more branching generations, and at least one spacer generation is at least a sub-generation.

9. Coating composition according to any of Claims 1 to 8, **characterized in that** the catalyst is phosphorus-containing and/or **in that** the catalyst (D) or the catalysts (D) is or are selected from the group of substituted phosphonic diesters and/or diphosphonic diesters, substituted phosphoric monoesters and/or phosphoric diesters, preferably from the group consisting of acylic phosphoric diesters and/or cyclic phosphoric diesters, and/or the corresponding amine-blocked phosphoric esters.

10. Coating composition according to any of Claims 1 to 9, **characterized in that** the compound (B) comprises
between 2.5 and 97.5 mol%, based on the entirety of structural units (I) and (II), of at least one structural unit of the formula (I)
-N(X-SiR''x(OR')3-x)n(X'-SiR''y(OR')3-y)m (I)
where
R' = hydrogen, alkyl or cycloalkyl, it being possible for the carbon chain to be interrupted by nonadjacent oxygen, sulfur or NRa groups, with Ra = alkyl, cycloalkyl, aryl or aralkyl,
X,X' = linear and/or branched alkylene or cycloalkylene radical having 1 to 20 carbon atoms, R" = alkyl, cycloalkyl, aryl, or aralkyl, it being possible for the carbon chain to be interrupted by nonadjacent oxygen, sulfur or NRa groups, with Ra = alkyl, cycloalkyl, aryl or aralkyl,
n = 0 to 2, m = 0 to 2, m+n = 2, and
x, y = 0 to 2,
and
between 2.5 and 97.5 mol%, based on the entirety of structural units (I) and (II), of at least one structural unit of the formula (II)
-Z-(X-SiR''x(OR')3-x) (II),
where
Z = -NH-, -NR-, -O-, with
R = alkyl, cycloalkyl, aryl or aralkyl, it being possible for the carbon chain to be interrupted by nonadjacent oxygen, sulfur or NRa groups, with Ra = alkyl, cycloalkyl, aryl or aralkyl,
x = 0 to 2, and
X, R', R'' have the definition stated in the case of formula (II).

11. Coating composition according to Claim 10, **characterized in that** the compound (B) contains between 5 and 95 mol%, based on the entirety of the structural units (I) and (II), of at least one structural unit of the formula (I), and between 5 and 95 mol%, based in each case on the entirety of the structural units (I) and (II), of at least one structural unit of the formula (II).

12. Coating composition according to Claim 10 or 11, **characterized in that** the structural elements (I) and (II) are present in fractions of 2.5 to 97.5 mol%, based on the sum of the functional groups critical for crosslinking in the coating composition, formed from the fractions of the hydroxyl and isocyanate groups and from the fractions of the structural elements (I) and (II).

13. Coating composition according to any of Claims 10 to 12, **characterized in that**, in the polyisocyanate (B), between 2.5 and 90 mol% of the isocyanate groups in the core polyisocyanate structure have undergone reaction to structural units (I) and between 2.5 and 90 mol% of the isocyanate groups in the core polyisocyanate structure have undergone reaction to structural units (II) and/or the total fraction of the isocyanate groups in the core polyisocyanate structure which have undergone reaction to the structural units (I) and/or (II) is between 5 and 95 mol%, and/or **in that** the core polyisocyanate structure is selected from the group of 1,6-hexamethylene diisocyanate, isophorone diisocyanate, and 4,4'-methylenedicyclohexyl diisocyanate, the biuret dimers of the aforementioned polyisocyanates and/or the isocyanurate trimers of the aforementioned polyisocyanates.

14. Multistage coating method, **characterized in that** a pigmented basecoat film is applied to an optionally precoated substrate and thereafter a film of the coating composition according to any of Claims 1 to 13 is applied.

15. Multistage coating method according to Claim 14, **characterized in that**, following the application of the pigmented basecoat film, the applied basecoat material is first dried at temperatures from room temperature to 80°C and, following the application of the coating composition according to any of Claims 1 to 13, the system is cured at temperatures from 30 to 200°C for a time of 1 min up to 10 h.

16. Use of the coating compositions according to any of Claims 1 to 13 as a clearcoat material or application of the method according to Claim 14 or 15 for automotive OEM finishing or automotive refinish.

17. Multicoat effect and/or color paint system comprising at least one pigmented basecoat and at least one clearcoat disposed thereon, **characterized in that** the clearcoat has been produced from a coating composition according to any of Claims 1 to 13.

## Revendications

1. Agent de revêtement à base de solvants aprotiques, contenant :
(a) au moins un composé contenant des groupes hydroxyle (A),
(b) au moins un composé saturé (B) contenant des groupes isocyanate libres et/ou bloqués, qui contient des groupes silane au moins partiellement hydrolysables, et
(c) au moins un catalyseur (D) pour la réticulation de groupes silane,
**caractérisé en ce que** l'agent de revêtement contient en tant que composé contenant des groupes hydroxyle (A) au moins un polyester dendritique hyper-ramifié à fonction hydroxy, en moyenne au moins une fonction hydroxyle du polyester étant estérifiée avec au moins un acide choisi dans le groupe des acides monocarboxyliques isomères en C8 à C9.

2. Agent de revêtement selon la revendication 1, **caractérisé en ce que** l'acide monocarboxylique est saturé ou **en ce que** l'acide monocarboxylique est l'acide octanoïque ou l'acide isononanoïque.

3. Agent de revêtement selon la revendication 1 ou 2, **caractérisé en ce que** l'agent de revêtement contient en tant que composé contenant des groupes hydroxyle (A) au moins un polyester dendritique hyper-ramifié à fonction hydroxy ayant un indice OH ≥ 180 mg KOH/g, mesuré selon DIN 53240.

4. Agent de revêtement selon l'une quelconque des revendications 1 à 3, **caractérisé en ce que** le polyester présente un indice hydroxyle > 180 mg KOH/g, déterminé selon DIN 53240 et/ou une fonctionnalité hydroxy (donnée par le nombre de groupes hydroxyle libres et estérifiés du polyester à fonction hydroxy) supérieure à 16.

5. Agent de revêtement selon l'une quelconque des revendications 1 à 4, **caractérisé en ce que** le polyester présente un indice d'acidité ≤ 8,0, déterminé selon DIN 53402, et/ou **en ce que** le polyester présente un poids moléculaire moyen en nombre de 1 500 à 4 000 g/mol, déterminé par CPG avec un étalon polystyrène dans du THF avec 0,1 % en poids d'acide acétique.

6. Agent de revêtement selon l'une quelconque des revendications 1 à 5, **caractérisé en ce que** le polyester présente une polydispersité Mw/Mn < 4.

7. Agent de revêtement selon l'une quelconque des revendications 1 à 6, **caractérisé en ce qu'**il contient en tant que solvant de l'acétate de butyle ou un mélange de solvants contenant de l'acétate de butyle.

8. Agent de revêtement selon l'une quelconque des revendications 1 à 7, **caractérisé en ce que** le polyester peut être fabriqué par estérification partielle d'un polyester à fonction hydroxy, qui peut à son tour être fabriqué par un procédé de synthèse d'un polyalcool polyfonctionnel polymère dendritique contenant des groupes terminaux hydroxyle réactifs et éventuellement protégés,
- le polyalcool polymère comprenant n branches dendritiques, qui proviennent d'une molécule initiatrice monomère ou polymère contenant n groupes réactifs (A1), chaque branche comprenant g générations de ramification, chaque génération comprenant au moins un allongeur de chaîne de ramification polymère ou monomère contenant trois groupes fonctionnels, parmi lesquels au moins deux sont des groupes hydroxyle réactifs (A2) et un est un groupe carboxyle (A3), qui est réactif avec le groupe réactif (A1) et/ou les groupes hydroxyle (A2), et éventuellement au moins une génération d'espaceur, qui comprend au moins un allongeur de chaîne espaceur contenant deux groupes fonctionnels, parmi lesquels un est un groupe hydroxyle protégé (A2'') et un est un groupe (A4), qui est réactif avec un groupe hydroxyle, n et g étant des nombres entiers et valant au moins 1,
- (i) les deux groupes hydroxyle (A2) de l'allongeur de chaîne de ramification monomère ou polymère utilisé étant des groupes hydroxyle protégés par un acétal (A2'), la protection par un acétal étant obtenue par une réaction entre les deux groupes hydroxyle (A2) et un composé carbonyle formant un acétal ; et
- (ii) une première génération de ramification étant ajoutée à la molécule initiatrice par réaction entre le groupe réactif (A1) et le groupe carboxyle (A3) en un rapport molaire entre les groupes réactifs (A1) et les groupes carboxyle (A3) d'au moins 1, un polyalcool polymère contenant des groupes hydroxyle protégés par un acétal (A2') et n branches dendritiques comprenant une génération étant ainsi obtenu, les groupes hydroxyle protégés par un acétal (A2') étant éventuellement déprotégés par clivage d'acétal, un polyalcool polymère contenant des groupes hydroxyle réactifs (A2) étant ainsi obtenu ; et
- (iii) des générations de ramification supplémentaires étant ajoutées en g - 1 étapes répétées par réaction entre des groupes hydroxyle réactifs (A2), qui sont obtenus par déprotection par clivage d'acétal, et des groupes carboxyle (A3) en un rapport molaire entre les groupes hydroxyle (A2) et les groupes carboxyle (A3) d'au moins 1, un polyalcool polymère contenant des groupes hydroxyle protégés par un acétal (A2') et n branches dendritiques comprenant deux générations ou plus, étant ainsi obtenu, les groupes hydroxyle protégés par un acétal (A2') étant éventuellement déprotégés par clivage d'acétal, un polyalcool polymère contenant des groupes hydroxyle réactifs (A2) étant ainsi obtenu, et
- (iv) l'étape (ii) et/ou chaque répétition de l'étape (iii) individuellement étant éventuellement suivies par
- (a) une protection partielle, telle que par exemple une protection en tant qu'acétal, cétal et/ou ester, de groupes hydroxyle réactifs (A2) disponibles, un polyalcool polymère contenant au moins un groupe hydroxyle réactif (A2) étant ainsi obtenu pour être utilisé dans l'étape (iii) ou dans une étape (ii) répétée, et/ou
- (b) l'ajout de l'allongeur de chaîne espaceur optionnel, qui permet d'obtenir après la déprotection du groupe hydroxyle protégé (A2") un polyalcool polymère contenant des groupes hydroxyle réactifs (A2) pour être utilisé dans l'étape (iii) ou une étape (iii) répétée et n branches dendritiques, comprenant une ou plusieurs générations de ramification, et au moins une génération d'espaceur étant au moins une génération partielle.

9. Agent de revêtement selon l'une quelconque des revendications 1 à 8, **caractérisé en ce que** le catalyseur contient du phosphore et/ou **en ce que** le catalyseur (D) ou les catalyseurs (D) sont choisis dans le groupe des diesters de l'acide phosphonique et/ou des diesters de l'acide diphosphonique substitués, des monoesters de l'acide phosphorique et/ou des diesters de l'acide phosphorique substitués, de préférence dans le groupe constitué par les diesters de l'acide phosphorique acycliques et/ou les diesters de l'acide phosphorique cycliques et/ou les esters de l'acide phosphorique amino-bloqués correspondants.

10. Agent de revêtement selon l'une quelconque des revendications 1 à 9, **caractérisé en ce que** le composé (B) comprend
entre 2,5 et 97,5 % en moles, par rapport à la totalité des unités structurales (I) et (II), d'au moins une unité structurale de formule (I)
-N(X-SiR''x(OR')3-x)n(X'-SiR''y(OR')3-y)m (I)
dans laquelle
R' = hydrogène, alkyle ou cycloalkyle, la chaîne carbonée pouvant être interrompue par des groupes oxygène, soufre ou NRa non voisins, avec Ra = alkyle, cycloalkyle, aryle ou aralkyle,
X, X' = radical alkylène ou cycloalkylène linéaire et/ou ramifié contenant 1 à 20 atomes de carbone, R'' = alkyle, cycloalkyle, aryle ou aralkyle, la chaîne carbonée pouvant être interrompue par des groupes oxygène, soufre ou NRa non voisins, avec Ra = alkyle, cycloalkyle, aryle ou aralkyle,
n = 0 à 2, m = 0 à 2, m + n = 2, et
x, y = 0 à 2,
et
entre 2,5 et 97,5 % en moles, par rapport à la totalité des unités structurales (I) et (II), d'au moins une unité structurale de formule (II)
-Z-(X-SiR''x(OR')3-x) (II)
dans laquelle
Z = -NH-, -NR-, -O-, avec
R = alkyle, cycloalkyle, aryle ou aralkyle, la chaîne carbonée pouvant être interrompue par des groupes oxygène, soufre ou NRa non voisins, avec Ra = alkyle, cycloalkyle, aryle ou aralkyle,
x = 0 à 2, et
X, R', R'' ont la signification indiquée pour la formule (II).

11. Agent de revêtement selon la revendication 10, **caractérisé en ce que** le composé (B) comprend entre 5 et 95 % en moles, par rapport à la totalité des unités structurales (I) et (II), d'au moins une unité structurale de formule (I), et entre 5 et 95 % en moles, à chaque fois par rapport à la totalité des unités structurales (I) et (II), d'au moins une unité structurale de formule (II).

12. Agent de revêtement selon la revendication 10 ou 11, **caractérisé en ce que** les éléments structuraux (I) et (II) sont présents en proportions de 2,5 à 97,5 % en moles, par rapport à la somme des groupes fonctionnels prépondérants pour la réticulation dans l'agent de revêtement, formée par les proportions des groupes hydroxyle et isocyanate, ainsi que les proportions des éléments structuraux (I) et (II).

13. Agent de revêtement selon l'une quelconque des revendications 10 à 12, **caractérisé en ce que**, dans le polyisocyanate (B), entre 2,5 et 90 % en moles des groupes isocyanate dans le corps de base du polyisocyanate sont transformés en unités structurales (I) et entre 2,5 et 90 % en moles des groupes isocyanate dans le corps de base du polyisocyanate sont transformés en unités structurales (II), et/ou la proportion totale des groupes isocyanate transformés en les unités structurales (I) et/ou (II) dans le corps de base du polyisocyanate est comprise entre 5 et 95 % en moles, et/ou **en ce que** le corps de base du polyisocyanate est choisi dans le groupe constitué par le diisocyanate de 1,6-hexaméthylène, le diisocyanate d'isophorone et le diisocyanate de 4,4'-méthylène-dicyclohexyle, les dimères de biuret des polyisocyanates susmentionnés et/ou les trimères d'isocyanurate des polyisocyanates susmentionnés.

14. Procédé de revêtement à plusieurs étapes, **caractérisé en ce qu'**une couche de laque de base pigmentée, puis une couche de l'agent de revêtement selon l'une quelconque des revendications 1 à 13 sont appliquées sur un substrat éventuellement pré-revêtu.

15. Procédé de revêtement à plusieurs étapes selon la revendication 14, **caractérisé en ce qu'**après l'application de la couche de laque de base pigmentée, la laque de base appliquée est tout d'abord séchée à des températures allant de la température ambiante à 80 °C et, après l'application de l'agent de revêtement selon l'une quelconque des revendications 1 à 13, durcie à des température de 30 à 200 °C pendant une durée de 1 min à 10 h.

16. Utilisation de l'agent de revêtement selon l'une quelconque des revendications 1 à 13 en tant que laque transparente ou utilisation du procédé selon la revendication 14 ou 15 pour le laquage automobile de série ou le laquage automobile de réparation.

17. Laquage multicouche à effet et/ou colorant constitué d'au moins une couche de laque de base pigmentée et d'au moins une couche de laque transparente agencée sur celle-ci, **caractérisé en ce que** la couche de laque transparente a été fabriquée à partir d'un agent de revêtement selon l'une quelconque des revendications 1 à 13.
